# EUROPEAN PATENT SPECIFICATION

(11) **EP 1 881 014 B1**
(45) Date of publication and mention of the grant of the patent: **23.05.2012**
(21) Application number: 06746227.5
(22) Date of filing: 10.05.2006
(51) Int. Cl.: C08F 210/00, C08F 4/60, C08F 236/20, C08K 5/54, C08L 23/02, C09D 123/02, C09J 123/02, C09K 3/10

(54) **ALPHA-OLEFIN/UNCONJUGATED CYCLIC POLYENE COPOLYMER, PROCESS FOR PRODUCING THE SAME, AND CROSSLINKABLE COMPOSITION CONTAINING THE COPOLYMER**
COPOLYMER AUS ALPHA-OLEFIN UND NICHT KONJUGIERTEM CYCLISCHEM POLYEN, HERSTELLUNGSVERFAHREN DAFÜR UND DAS COPOLYMER ENTHALTENDE VERNETZBARE ZUSAMMENSETZUNG
COPOLYMERE DE POLYENE CYCLIQUE NON CONJUGUE/ALPHA-OLEFINE, SON PROCEDE DE PRODUCTION ET COMPOSITION RETICULABLE CONTENANT LE COPOLYMERE

(30) Priority: 11.05.2005 JP 2005138843
(43) Date of publication of application: 23.01.2008
(73) Proprietor: Mitsui Chemicals, Inc., Minato-ku Tokyo 105-7117 (JP)
(72) Inventor: MATSUURA, Sadahiko c/o MITSUI CHEMICALS, INC.,, Chiba 2990265 (JP); MATSUI, Shigekazu c/o MITSUI CHEMICALS, INC.,, Chiba 2990265 (JP); TERAO, Hiroshi c/o MITSUI CHEMICALS, INC.,, Chiba 2990265 (JP); ISHII, Seiichi c/o MITSUI CHEMICALS, INC.,, Chiba 2990265 (JP); MAKIO, Haruyuki c/o MITSUI CHEMICALS, INC.,, Chiba 2990265 (JP); HAKUTA, Takashi c/o MITSUI CHEMICALS, INC.,, Chiba 2990108 (JP); MURAKAMI, Hidetatsu c/o MITSUI CHEMICALS, INC.,, Chiba 2990108 (JP); FUJITA, Terunori c/o MITSUI CHEMICALS, INC.,, Chiba 2990265 (JP)
(74) Representative: HOFFMANN EITLE
(86) International application number: PCT/JP2006/309417
(87) International publication number: WO 2006/121086

(56) References cited:
- EP-A- 0 874 005
- EP-A- 1 203 778
- EP-A- 1 293 534
- WO-A-2004/065435
- WO-A1-01/98407
- WO-A1-2004/065435
- JP-A- 01 054 010
- JP-A- 09 071 616
- JP-A- 09 241 326
- LI X-F ET AL: "NEW TITANIUM COMPLEXES WITH TWO BETA-ENAMINOKETONATO CHELATE LIGANDS: SYNTHESES, STRUCTURES, AND OLEFIN POLYMERIZATION ACTIVITIES" ORGANOMETALLICS, ACS, WASHINGTON, DC, US, vol. 23, no. 6, 15 March 2004 (2004-03-15), pages 1223-1230, XP001189832 ISSN: 0276-7333

## Description

### FIELD OF THE INVENTION

The present invention relates to α-olefin/non-conjugated cyclic polyene copolymers and processes for producing the copolymers. The invention also relates to crosslinkable rubber compositions which contain the copolymer and a crosslinking agent and which have good crosslinking properties and can give crosslinked products having excellent tensile properties.

### BACKGROUND OF THE INVENTION

α-Olefin copolymers which are obtained by copolymerizing an α-olefin and a non-conjugated polyene are crosslinked via double bonds, and such rubber components are widely used in automobile parts, wire covers, industrial parts and so on. Patent Document 1 discloses rubber compositions which include an α-olefin/non-conjugated polyene random copolymer having a vinyl group, and a SiH group-containing compound. The rubber compositions are described to have a high crosslinking rate at room temperature and thereby enable efficient production of shaped articles of crosslinked rubbers, and to be excellent in weathering resistance, ozone resistance, thermal aging resistance, compression set resistance, forming properties and adhesion. The rubber compositions are promising curable materials for sealing, coating, potting and bonding in various industries including electric and electronic parts, transport vehicles, civil engineering and construction, medical care and leisure industries. The α-olefin/non-conjugated cyclic polyene random copolymers having a vinyl group are generally produced with a vanadium-based catalyst formed of a vanadium compound and an organoaluminum compound. However, the polymerization activity of the catalyst is not at an industrially satisfactory level and high-yield production is difficult. The vinyl group-containing non-conjugated cyclic polyene has two kinds of double bonds in the molecule (one in the cyclic olefin group and one in the vinyl group) . The polymerization should proceed selectively via the double bonds of the cyclic olefin groups, but some of the double bonds in the vinyl groups participate in the polymerization. Consequently, the introduction of the vinyl groups in the polymer is frequently inefficient. For example, Patent Document 2 discloses ethylene/propylene (or butene)/5-vinyl-2-norbornene (VNB) ternary copolymers synthesized with a vanadium catalyst. According to the document, 40 to 70% of the vinyl groups in VNB forming the polymer are consumed during the polymerization. In an attempt to increase the content of the vinyl groups, the copolymer will generally have a wide molecular weight distribution to suffer problems such as gelation. Such an attempt can result in deterioration of mechanical properties, particularly tensile properties, of the curable material. Patent Document 3 discloses ethylenically unsaturated copolymers having double bonds at 0.01 to 3.5 mol%. These copolymers are crystalline polymers having a melting point of 120°C or greater and are inferior in properties such as rubber elasticity. This patent document is therefore not relevant to the present invention.

Patent Document 4 relates to an olefin polymerization catalyst and polymers prepared using this catalyst. The polymer produced is an α-olefin/conjugated diene. The olefins used as α-olefin component are straight-chain or branched α-olefins having 2-30 carbon atoms, including ethylene, propylene and vinyl norbornene. Further, a non-conjugated diene or polyene such as vinyl norbornene may be added to the α-olefin/conjugated diene copolymer

Patent Document 5: relates to a process for producing ethylene/α-olefin/non-conjugated polyene copolymers with the aid of a transition metal compound catalyst wherein the molar ratio of the structural units derived from ethylene to the structural units derived from the C₃₋₂₀ α-olefin can be from 99/1 to 1/99 and the amount of non-conjugated polyene is 0.1-49 mol% based on the total of ethylene, C3-20 α-olefin and non-conjugated polyene.

Patent Document 6 concerns a vanadium-based catalyst system for producing, among others, ethylene/α-olefin/diolefin copolymers. The diolefin may be a non-conjugated diolefin monomer and is used in an amount of 0.5-15 wt.-%.

Non-Patent Document 1 concerns titanium complexes with two non-symmetric bidentate β-enaminoketonato (N,O) ligands for use in the copolymerization of ethylene and norbornene.

| | |
|---|---|
| Patent Document 1: | WO 01/98407 |
| Patent Document 2: | JP-A-H01-054010 |
| Patent Document 3: | JP-A-H7-082323 |
| Patent Document 4: | EP 0 874 005 A |
| Patent Document 5: | WO 2004/065435 A |
| Patent Document 6: | EP 1 203 778 A |
| Non-Patent Document 1: | Li et al. Organometallics 2004, 23, 1223-1230 |

### DISCLOSURE OF THE INVENTION

### PROBLEMS TO BE SOLVED BY THE INVENTION

The present invention has an object of providing α-olefin copolymers containing a vinyl group, and an efficient production process thereof. Specifically, it is an object of the invention that a process for producing α-olefin/non-conjugated cyclic polyene copolymers is provided in which an α-olefin and a non-conjugated cyclic polyene having a cyclic olefin structure and a vinyl group are efficiently copolymerized such that a sufficient proportion of the vinyl groups of the non-conjugated cyclic polyene is retained. Other objects of the invention are that novel copolymers are provided in which a sufficient amount of the vinyl groups derived from a non-conjugated cyclic polyene is present and which have a narrow molecular weight distribution, and that crosslinkable compositions containing the copolymer are provided.

### MEANS FOR SOLVING THE PROBLEMS

The present inventors have studied earnestly to develop a polymerization system having reaction selectivity such that a non-conjugated cyclic polyene shows high polymerization reactivity of a cyclic olefin group and low polymerization reactivity of a vinyl group. They have then found specific polymerization conditions under which the polymerization takes place in the above selective manner and α-olefin/non-conjugated cyclic polyene copolymers with a narrow molecular weight distribution are produced while a sufficient proportion of the vinyl groups of the non-conjugated cyclic polyene is retained. The present invention has been completed based on the findings.

An α-olefin/non-conjugated cyclic polyene copolymer (A) according to the present invention comprises structural units (I) represented by Formula (I) and structural units (II) represented by Formula (II), has a molecular weight distribution (Mw/Mn) of not more than 2.7, and is amorphous (crystalline heat of fusion (ΔH) : 0 kJ/kg) or crystalline with a crystalline heat of fusion (ΔH) of less than 90 kJ/kg; 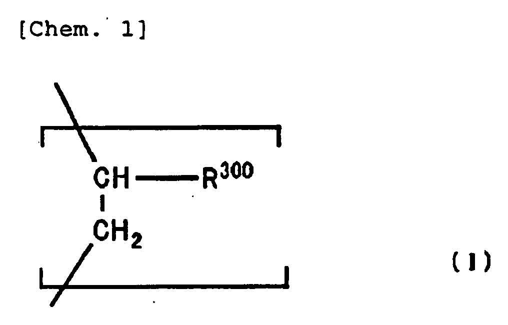 (wherein R³⁰⁰ is a hydrogen atom or a linear or branched hydrocarbon group of 1 to 29 carbon atoms); 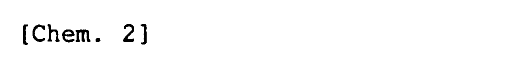 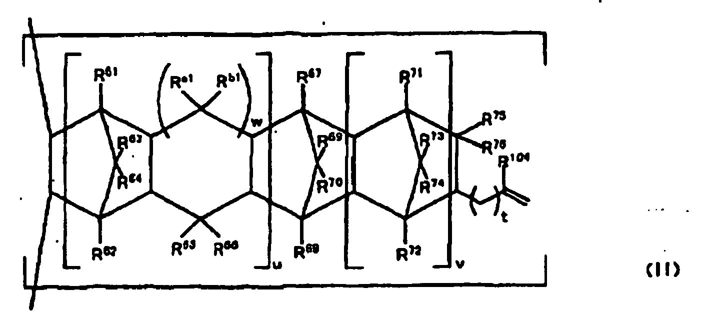 (wherein u is 0; v is 0 R⁶⁷ to R⁷⁰ and R⁷⁵ to R⁷⁶ are each a hydrogen atom; R¹⁰⁴ is a hydrogen atom and t is 0.

In the α-olefin/non-conjugated cyclic polyene copolymer (A), R³⁰⁰ in Formula (I) is preferably a hydrogen atom. In the α-olefin/non-conjugated cyclic polyene copolymer (A), the structural units (I) preferably include structural units of Formula (I) in which R³⁰⁰ is a hydrogen atom and structural units of Formula (I) in which R³⁰⁰ is a linear or branched hydrocarbon group of 1 to 29 carbon atoms.

The α-olefin/non-conjugated cyclic polyene copolymer (A) is suitable for use in sealing materials, potting materials, coating materials or adhesives.

A process for producing the α-olefin/non-conjugated cyclic polyene copolymer (A) according to the present invention comprises copolymerizing ethylene, at least one linear or branched α-olefin of 3 to 31 carbon atoms and 5-vinyl-2-norbornene in the presence of a catalyst comprising:
(P) a transition metal compound represented by Formula (III); and
(Q) at least one compound selected from:
   (Q-1) an organometallic compound;
   (Q-2) an organoaluminum oxy-compound; and
   (Q-3) a compound capable of reacting with the transition metal compound (P) to form an ion pair; 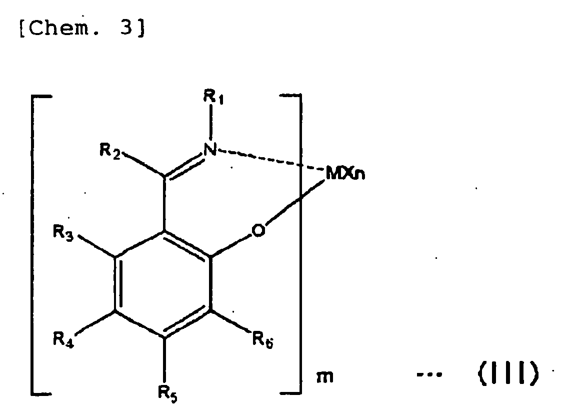
(wherein M is a transition metal of Group 3 to Group 11; m is an integer of 1 to 4; R¹ to R⁶ may be the same or different and are each a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group or a tin-containing group, and two or more of these groups may be linked together to form a ring; when m is 2 or greater, one of R¹ to R⁶ in one ligand may be linked to one of R¹ to R⁶ in another ligand (with the proviso that the groups R¹ are not linked together), and R¹s, R²s, R³s, R⁴s , R⁵s and R⁶s may be each the same or different atoms or groups; n is a number satisfying the valence of M; X is a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group or a tin-containing group; and when n is 2 or greater, the groups X may be the same or different and may be linked together to form a ring).

A crosslinkable composition according to the present invention comprises the α-olefin/non-conjugated cyclic polyene copolymer (A) and a crosslinking agent (B).

In the crosslinkable composition, the crosslinking agent (B) is preferably a SiH group-containing compound (B1) that has two or more hydrogen atoms bonded to a silicon atom in the molecule. The crosslinkable composition preferably includes a catalyst (C). When the crosslinkable composition includes the catalyst (C), it preferably further includes a reaction inhibitor (D) and/or a silane coupling agent (E).

### EFFECTS OF THE INVENTION

The α-olefin/non-conjugated cyclic polyene copolymers of the present invention have a narrower molecular weight distribution and a higher content of the vinyl groups than the existing copolymers. The copolymers can give crosslinked products having superior tensile properties. The copolymers may be used as a plasticizer for polymers such as rubbers to provide excellent performances such as processability, mechanical strength of crosslinked products and rubber elasticity (compression set resistance). The copolymers contain a large amount of the vinyl groups, and by converting the vinyl groups to polar groups, various functional polyolefin materials may be obtained.

The processes for producing the α-olefin/non-conjugated cyclic polyene copolymers are capable of efficiently copolymerizing an α-olefin and a non-conjugated cyclic polyene having a cyclic olefin structure and a vinyl group while a sufficient,proportion of the vinyl groups of the non-conjugated cyclic polyene is retained. The crosslinkable compositions of the invention can give crosslinked products having superior tensile properties.

### PREFERRED EMBODIMENTS OF THE INVENTION

The present invention will be described in detail hereinbelow.

### α-Olefin/non-conjugated cyclic polyene copolymer (A)

The α-olefin/non-conjugated cyclic polyene copolymer (A) includes structural units (I) of Formula (I) derived from the α-olefin and structural units (II) of Formula (II) derived from the non-conjugated cyclic polyene. Because of the structural units (II), the α-olefin/non-conjugated cyclic polyene copolymer contains a vinyl bond in the polymer skeleton. The copolymer has a narrow molecular weight distribution (Mw/Mn) of not more than 2.7, and is amorphous (crystalline heat of fusion (ΔH) : 0 kJ/kg) or low crystalline with a crystalline heat of fusion (ΔH) of less than 90 kJ/kg. 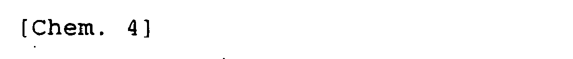 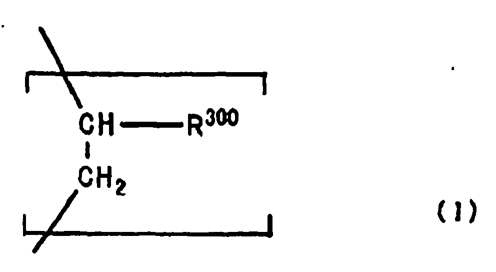 (In Formula (I), R³⁰⁰ is a hydrogen atom or a linear or branched hydrocarbon group of 1 to 29 carbon atoms.) 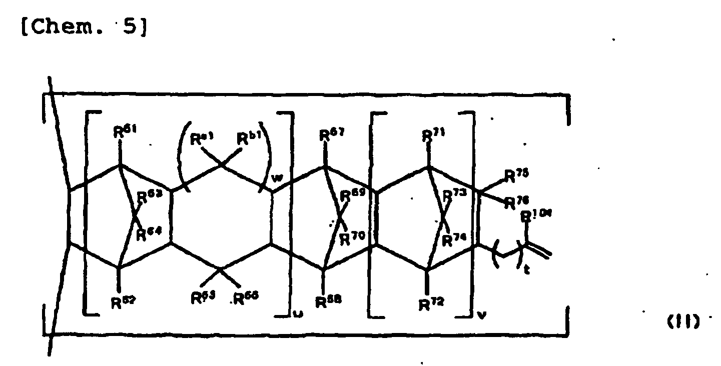 (In Formula (II), u is 0; v is 0; R⁶⁷ to R⁷⁰ and R⁷⁵ to R⁷⁶ are each a hydrogen atom; R¹⁰⁴ is a hydrogen atom and t is 0.)

The α-olefin/non-conjugated cyclic polyene copolymer (A) generally includes the structural units (I) that are derived from at least one α-olefin of 2 to 31 carbon atoms represented by Formula (I-a), and the structural units (II) that are derived from one non-conjugated cyclic polyene represented by Formula (II-a).

As long as the α-olefin/non-conjugated cyclic polyene copolymer (A) is used in common uses, the copolymer preferably consists solely of at least one α-olefin of 2 to 31 carbon atoms represented by Formula (I-a) and one non-conjugated cyclic polyene represented by Formula (II-a), without any other comonomers.

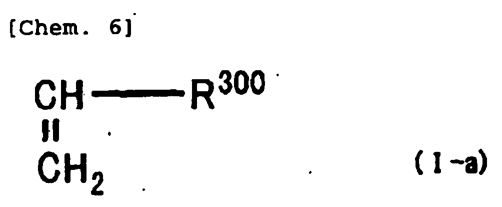

(In Formula (I-a), a hydrogen atom or a linear or branched hydrocarbon group of 1 to 29 carbon atoms is represented by a symbol.) 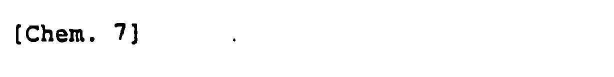 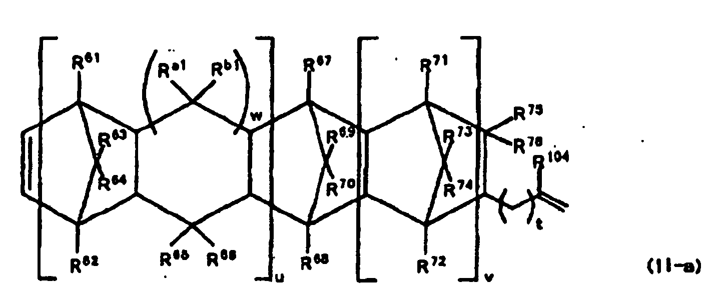 (In Formula (II-a), u is 0; v is 0; R⁶⁷ to R⁷⁰ and R⁷⁵ to R⁷⁶ are each a hydrogen atom; R¹⁰⁴ is a hydrogen atom and t is 0.)

In the α-olefin/non-conjugated cyclic polyene copolymer (A), the α-olefin component contains ethylene. That is, the copolymer preferably includes structural units of Formula (I) in which R³⁰⁰ is hydrogen.

The α-olefin/non-conjugated cyclic polyene copolymer (A) contains at least two kinds of the structural units (I) derived from α-olefins, and one of such structural units is derived from ethylene.

In the α-olefin/non-conjugated cyclic polyene copolymer (A), the weight ratio (molar ratio) of the structural units derived from ethylene and the structural units derived from a C3-31 α-olefin in the total of the structural units (I) is preferably 40/60 to 95/5 (ethylene-derived structural units/α-olefin-derived structural units). In the α-olefin/non-conjugated cyclic polyene copolymer (A), the structural units (II) accounts for 0.01 to 20% by weight of the total of the structural units (I) and the structural units (II)

The α-olefin/non-conjugated cyclic polyene copolymer (A) preferably has an intrinsic viscosity [η] in decalin at 135°C in the range of 0.01 to 2.0 dl/g, more preferably 0.02 to 1.8 dl/g, still more preferably 0.05 to 1.5 dl/g, particularly preferably 0.1 to 1.4 dl/g, optimally 0.1 to less than 0.5 dl/g, particularly preferably 0.1 to 0.45 dl/g. The copolymer having this intrinsic viscosity [η] gives rubber compositions that show excellent flowability and forming properties and produce crosslinked rubber shaped articles having excellent strength properties and compression set resistance.

The α-olefin/non-conjugated polyene copolymer has a molecular weight distribution Mw/Mn of not more than 2.7, preferably not more than 2.3, more preferably not more than 2.1. The copolymer having this molecular weight distribution Mw/Mn gives rubber compositions that show excellent processability and produce crosslinked rubber shaped articles having excellent strength properties, particularly tensile properties.

In order to obtain the α-olefin/non-conjugated cyclic polyene copolymer (A) having this narrow molecular weight distribution, it is necessary that a large proportion (S) of the double bonds of the structural units derived from the non-conjugated cyclic polyene of Formula (II-a) remains without being consumed during the polymerization. This proportion may be determined by a method disclosed in Japanese Patent No. 2546849. In the invention, the proportion S is desirably not less than 85 mol%, preferably not less than 90 mol%, more preferably not less than 95 mol%.

### Production of α-olefin/non-conjugated cyclic polyene copolymer (A)

### <α-Olefin monomer>

In the production of the α-olefin/non-conjugated cyclic polyene copolymer (A), at least one α-olefin of 2 to 31 carbon atoms represented by Formula (I-a) below is used corresponding to the structural units (I) of Formula (I). 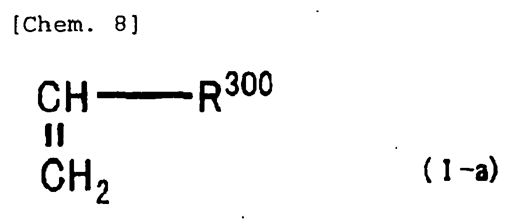 (In Formula (I-a), a hydrogen atom or a linear or branched hydrocarbon group of 1 to 29 carbon atoms is represented by a symbol.)

The α-olefins may be used singly or in combination of two or more kinds. Preferably, two or more α-olefins are used in combination. More preferably, ethylene and one or more α-olefins of 3 to 31 carbon atoms are used in combination.

Examples of the α-olefins of 3 to 31 carbon atoms include propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyl-1-decene, 11-methyl-1-dodecene and 12-ethyl-1-tetradecene. Of these, the α-olefins of 3 to 20 carbon atoms are preferable, and the α-olefins of 3 to 10 carbon atoms are more preferable. In particular, propylene, 1-butene, 1-hexene and 1-octene are preferable.

The weight ratio of the structural units derived from ethylene and the structural units derived from the one or more C3-31 α-olefins in the total of the structural units (I) is preferably 40/60 to 95/5, more preferably 45/55 to 90/10, still more preferably 50/50 to 85/15, particularly preferably 50/50 to 80/20 (ethylene-derived structural units/α-olefin-derived structural units).

This weight ratio results in rubber compositions that produce crosslinked rubber shaped articles excellent in thermal aging resistance, strength properties, rubber elasticity, freeze resistance and processability.

### <Non-conjugated cyclic polyene monomer>

In the production of the α-olefin/non-conjugated cyclic polyene copolymer (A), one non-conjugated cyclic polyene represented by Formula (II-a) below is used corresponding to the structural units (II) of Formula (II). 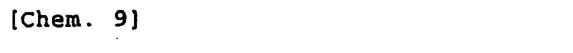 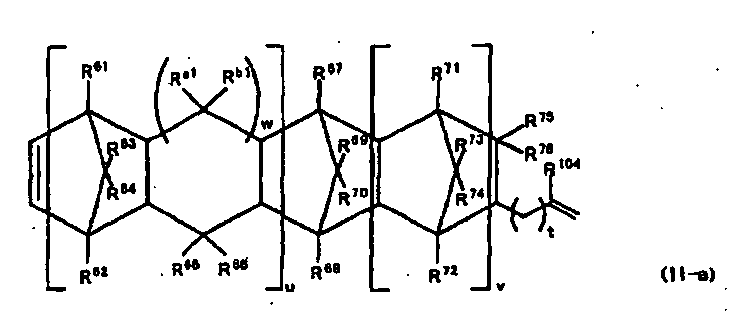 (In Formula (II-a), u is 0; v is 0; R⁶⁷ to R⁷⁰ and R⁷⁵ to R⁷⁶ are each a hydrogen atom; R¹⁰⁴ is a hydrogen atom and t is 0.)

The non-conjugated cyclic polyene represented by Formula (II-a) is 5-vinyl-2-norbornene.

In the α-olefin/non-conjugated cyclic polyene copolymer (A), the structural units (II) derived from the non-conjugated cyclic polyene account for 0.01 to 20% by weight, preferably 0.02 to 10.0% by weight, more preferably 0.05 to 5.0% by weight of the total (100% by weight) of the structural units (I) and the structural units (II). The α-olefin/non-conjugated cyclic polyene copolymer (A) having this content of the structural units (II) gives rubber compositions that show a high crosslinking rate at room temperature and produce crosslinked rubber shaped articles having superior compression set resistance and environmental degradation resistance (thermal aging resistance).

In the invention, the compound represented by Formula (II-a) may be used in combination with other non-conjugated polyenes (II-a') described below while still achieving desired properties of the invention. In this case, structural units derived from such non-conjugated polyene (II-a') account for 0.01 to 15% by weight of the total (100% by weight) of the structural units (I) and the structural units (II). In a preferred embodiment of the present invention, the copolymer does not contain any structural units derived from the polyene (II-a').

Examples of the non-conjugated polyenes (II-a') include chain non-conjugated dienes such as 1,4-hexadiene, 3-methyl-1,4-hexadiene, 4-methyl-1,4-hexadiene, 5-methyl-1,4-hexadiene, 4,5-dimethyl-1,4-hexadiene and 7-methyl-1,6-octadiene; cyclic non-conjugated dienes such as methyltetrahydroindene, 5-ethylidene-2-norbornene, 5-methylene-2-norbornene, 5-isopropylidene-2-norbornene, 5-vinylidene-2-norbornene, 6-chloromethyl-5-isopropenyl-2-norbornene and dicyclopentadiene; and trienes such as 2,3-diisopropylidene-5-norbornene, 2-ethylidene-3-isopropylidene-5-norbornene and 2-propenyl-2,2-norbornadiene.

### <Copolymerization catalyst>

The α-olefin/non-conjugated cyclic polyene copolymer (A) according to the present invention may be produced by copolymerizing the α-olefin monomer and the non-conjugated cyclic polyene monomer. The production of the α-olefin/non-conjugated cyclic polyene copolymer (A) may suitably use a copolymerization catalyst including:
(P) a transition metal compound represented by Formula (III) ; and
(Q) at least one compound selected from:
   (Q-1) an organometallic compound;
   (Q-2) an organoaluminum oxy-compound; and
   (Q-3) a compound capable of reacting with the transition metal compound (P) to form an ion pair; 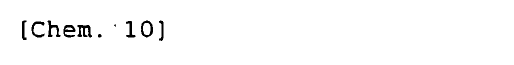 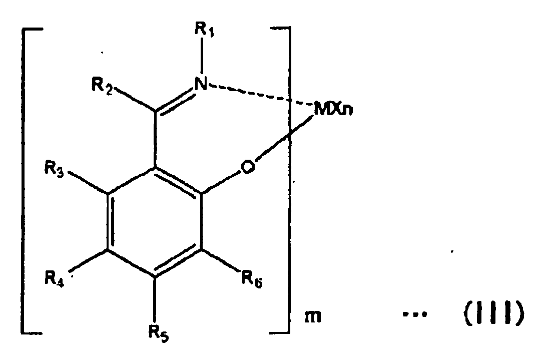
(wherein M is a transition metal of Group 3 to Group 11; m is an integer of 1 to 4; R¹ to R⁶ may be the same or different and are each a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group or a tin-containing group, and two or more of these groups may be linked together to form a ring; when m is 2 or greater, one of R¹ to R⁶ in one ligand may be linked to one of R¹ to R⁶ in another ligand (with the proviso that the groups R¹ are not linked together), and R¹s, R²s, R³s, R⁴s, R⁵s and R⁶s may be each the same or different atoms or groups; n is a number satisfying the valence of M; X is a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group or a tin-containing group; and when n is 2 or greater, the groups X may be the same or different and may be linked together to form a ring).

In Formula (III), M is a transition metal atom of Group 3 to Group 11 of the Periodic Table (Group 3 includes lanthanoids), and is preferably a metal atom of Group 3 to Group 6, more preferably Group 4 and Group 5. Specific examples include scandium, titanium, zirconium, hafnium, vanadium, niobium, tantalum, chromium, cobalt, iron and ruthenium, with titanium, zirconium, hafnium and vanadium being preferable, and titanium being particularly preferable. The letter m is an integer of 1 to 4, preferably 1 or 2, more preferably 2.

In Formula (III), the hydrocarbon group may be a halogenated hydrocarbon group in which a hydrogen atom has been substituted with a halogen. For example, halogenated hydrocarbon groups of 1 to 30, preferably 1 to 20 carbon atoms may be used, with examples including trifluoromethyl, pentafluorophenyl and chlorophenyl.

Further, the hydrocarbon group may be substituted with another hydrocarbon group, and examples of the substituted hydrocarbon groups include aryl group-substituted alkyl groups such as benzyl and cumyl.

Furthermore, the hydrocarbon group may contain heterocyclic compound residues; oxygen-containing groups such as alkoxy, aryloxy, ester, ether, acyl, carboxyl, carbonate, hydroxyl, peroxy and carboxylic acid anhydride groups; nitrogen-containing groups such as amino, imino, amide, imide, hydrazino, hydrazono, nitro, nitroso, cyano, isocyano, cyanic acid ester, amidino, diazo, and ammonium salt groups originating from amino groups; boron-containing groups such as boranediyl, boranetriyl and diboranyl groups; sulfur-containing groups such as mercapto, thioester, dithioester, alkylthio, arylthio, thioacyl, thioether, thiocyanic acid ester, isocyanic acid ester, sulfonate, sulfonamide, thiocarboxyl, dithiocarboxyl, sulfo, sulfonyl, sulfinyl and sulfenyl groups; phosphorus-containing groups such as phosphide, phosphoryl, thiophosphoryl and phosphate groups; silicon-containing groups, germanium-containing groups and tin-containing groups.

Of these, preferable are the linear or branched alkyl groups of 1 to 30, preferably 1 to 20 carbon atoms such as methyl, ethyl, n-propyl, isopropyl, n-butyl, isobutyl, sec-butyl, t-butyl, neopentyl and n-hexyl groups; aryl groups of 6 to 30, preferably 6 to 20 carbon atoms such as phenyl, naphthyl, biphenyl, terphenyl, phenanthryl and anthracenyl groups; and substituted aryl groups obtained by substituting the above aryl groups with 1 to 5 substituent groups selected from halogen atoms, alkyl and alkoxy groups of 1 to 30, preferably 1 to 20 carbon atoms, and aryl and aryloxy groups of 6 to 30, preferably 6 to 20 carbon atoms.

Examples of the oxygen-containing groups, nitrogen-containing groups, boron-containing groups, sulfur-containing groups and phosphorus-containing groups include those described hereinabove.

Examples of the heterocyclic compound residues include residues of nitrogen-containing compounds such as pyrrole, pyridine, pyrimidine, quinoline and triadine; residues of oxygen-containing compounds such as furan and pyran; residues of sulfur-containing compounds such as thiophene; and substituted heterocyclic compound residues obtained by substituting the above residues with substituent groups such as alkyl and alkoxy groups of 1 to 30, preferably 1 to 20 carbon atoms.

Examples of the silicon-containing groups include silyl, siloxy, hydrocarbon-substituted silyl and hydrocarbon-substituted siloxy groups. Specific examples include methylsilyl, dimethylsilyl, trimethylsilyl, ethylsilyl, diethylsilyl, triethylsilyl, diphenylmethylsilyl, triphenylsilyl, dimethylphenylsilyl, dimethyl-t-butylsilyl and dimethyl(pentafluorophenyl)silyl groups. Of these, methylsilyl, dimethylsilyl, trimethylsilyl, ethylsilyl, diethylsilyl, triethylsilyl, dimethylphenylsilyl and triphenylsilyl groups are preferable. In particular, trimethylsilyl, triethylsilyl, triphenylsilyl and dimethylphenylsilyl groups are preferable. Examples of the hydrocarbon-substituted siloxy groups include trimethylsiloxy group.

Examples of the germanium-containing groups and the tin-containing groups include groups corresponding to the above silicon-containing groups except that the silicon is replaced by germanium or tin.

R¹ to R⁵ in Formula (III) will be described in more detail.

The alkoxy groups include methoxy, ethoxy, n-propoxy, isopropoxy, n-butoxy, isobutoxy and t-butoxy groups. The alkylthio groups include methylthio and ethylthio groups. The aryloxy groups include phenoxy, 2,6-dimethylphenoxy and 2,4,6-trimethylphenoxy groups. The arylthio groups include phenylthio, methylphenylthio and naphthylthio groups. The acyl groups include formyl, acetyl, benzoyl, p-chlorobenzoyl and p-methoxybenzoyl groups. The ester groups include acetyloxy, benzoyloxy, methoxycarbonyl, phenoxycarbonyl and p-chlorophenoxycarbonyl groups. The thioester groups include acetylthio, benzoylthio, methylthiocarbonyl and phenylthiocarbonyl groups. The amide groups include acetamide, N-methylacetamide and N-methylbenzamide groups. The imide groups include acetimide and benzimide groups. The amino groups include dimethylamino, ethylmethylamino and diphenylamino groups. The imino groups include methylimino, ethylimino, propylimino, butylimino and phenylimino groups. The sulfonate groups include methyl sulfonate, ethyl sulfonate and phenyl sulfonate groups. The sulfonamide groups include phenylsulfonamide, N-methylsulfonamide and N-methyl-p-toluenesulfonamide groups.

Of R¹ to R⁵, two or more groups, which are preferably neighbor to one another, may be linked together to form an aliphatic ring, an aromatic ring, or a hydrocarbon ring containing a heteroatom such as a nitrogen atom. Such ring may have a substituent group.

R⁶ is an aliphatic hydrocarbon group, an alicyclic hydrocarbon group or an aromatic group in which the carbon atom bonded directly to the phenyl group is a primary, secondary or tertiary carbon. Referring to R⁶, preferable examples of the aliphatic hydrocarbon groups include linear or branched (secondary) alkyl groups of 1 to 30, preferably 1 to 20 carbon atoms such as methyl, ethyl, n-propyl, isopropyl, n-butyl, isobutyl, sec-butyl, neopentyl and n-hexyl; preferable examples of the alicyclic hydrocarbon groups include cyclic saturated hydrocarbon groups of 3 to 30, preferably 3 to 20 carbon atoms such as cyclopropyl, cyclobutyl, cyclopentyl, cyclohexyl, 2-methylcyclohexyl, 3-methylcyclohexyl, 4-methylcyclohexyl, 4-tert-butylcyclohexyl, 2,6-dimethylcyclohexyl, 2,4,6-trimethylcyclohexyl, 3,5-dimethylcyclohexyl, 2,3,4,5,6-pentamethylcyclohexyl, 2,2-dimethylcyclohexyl, 2,2,6,6-tetramethylcyclohexyl, 3,5-di-tert-butylcyclohexyl, cycloheptyl, cyclooctyl and cyclododecyl; and preferable examples of the aromatic groups include aryl groups of 6 to 30, preferably 6 to 20 carbon atoms such as phenyl, benzyl, naphthyl, biphenylyl and triphenylyl. These groups may be preferably substituted with alkyl groups of 1 to 30, preferably 1 to 20 carbon atoms, and aryl groups of 6 to 30, preferably 6 to 20 carbon atoms.

In particular, R⁶ is preferably selected from the linear or branched (secondary) alkyl groups of 1 to 30, preferably 1 to 20 carbon atoms such as methyl, ethyl, isopropyl, isobutyl, sec-butyl and neopentyl; the cyclic saturated hydrocarbon groups of 3 to 30, preferably 3 to 20 carbon atoms such as cyclopropyl, cyclobutyl, cyclopentyl, cyclohexyl, cycloheptyl, cyclooctyl and cyclododecyl; and the aryl groups of 6 to 30, preferably 6 to 20 carbon atoms such as phenyl, naphthyl, fluorenyl, anthranyl and phenanthryl.

In Formula (III), when m is 2 or greater, one of R¹ to R⁶ in one ligand may be linked to one of R¹ to R⁶ in another ligand (with the proviso that the groups R¹ are not linked together), and R¹s, R²s, R³s, R⁴s, R⁵s and R⁶s may be each the same or different atoms or groups.

The letter n is a number satisfying the valence of M, and is specifically an integer of 0 to 5, preferably 1 to 4, more preferably 1 to 3.

X is a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group or a tin-containing group. When n is 2 or greater, the groups X may be the same or different.

Examples of the halogen atoms include fluorine, chlorine, bromine and iodine.

Examples of the hydrocarbon groups include those described above for R¹ to R⁵. Specific examples include, but are not limited to, alkyl groups such as methyl, ethyl, propyl, butyl, hexyl, octyl, nonyl, dodecyl and eicosyl groups; cycloalkyl groups of 3 to 30 carbon atoms such as cyclopentyl, cyclohexyl, norbornyl and adamantyl groups; alkenyl groups such as vinyl, propenyl and cyclohexenyl groups; arylalkyl groups such as benzyl, phenylethyl and phenylpropyl groups; and aryl groups such as phenyl, tolyl, dimethylphenyl, trimethylphenyl, ethylphenyl, propylphenyl, biphenyl, naphthyl, methylnaphthyl, anthryl and phenanthryl groups. Examples of the hydrocarbon groups further include halogenated hydrocarbon groups such as hydrocarbon groups of 1 to 20 carbon atoms in which at least one hydrogen atom is substituted with a halogen. Of the hydrocarbon groups, those having 1 to 20 carbon atoms are preferable.

Examples of the heterocyclic compound residues include those described above for R¹ to R⁵.

Examples of the oxygen-containing groups include those described above for R¹ to R⁵. Specific examples include, but are not limited to, hydroxy group; alkoxy groups such as methoxy, ethoxy, propoxy and butoxy groups; aryloxy groups such as phenoxy, methylphenoxy, dimethylphenoxy and naphthoxy groups; arylalkoxy groups such as phenylmethoxy and phenylethoxy groups; acetoxy group; and carbonyl group.

Examples of the sulfur-containing groups include those described above for R¹ to R⁵. Specific examples include, but are not limited to, sulfonate groups such as methyl sulfonate, trifluoromethane sulfonate, phenyl sulfonate, benzyl sulfonate, p-toluene sulfonate, trimethylbenzene sulfonate, triisobutylbenzene sulfonate, p-chlorobenzene sulfonate and pentafluorobenzene sulfonate groups; sulfinate groups such as methyl sulfinate, phenyl sulfinate, benzyl sulfinate, p-toluene sulfinate, trimethylbenzene sulfinate and pentafluorobenzene sulfinate groups; alkylthio groups; and arylthio groups.

Examples of the nitrogen-containing groups include those described above for R¹ to R⁵. Specific examples include, but are not limited to, amino group; alkylamino groups such as methylamino, dimethylamino, diethylamino, dipropylamino, dibutylamino and dicyclohexylamino groups; and arylamino groups and alkylarylamino groups such as phenylamino, diphenylamino, ditolylamino, dinaphthylamino and methylphenylamino groups.

Examples of the boron-containing groups include BR₄ (wherein R is a hydrogen atom, an alkyl group, an aryl group which may have a substituent group, or a halogen atom).

Examples of the phosphorus-containing groups include, but are not limited to, trialkylphosphine groups such as trimethylphosphine, tributylphosphine and tricyclohexylphosphine groups; triarylphosphine groups such as triphenylphosphine and tritolylphosphine groups; phosphite (phosphide) groups such as methylphosphite, ethylphosphite and phenylphosphite groups; phosphonic acid groups; and phosphinic acid groups.

Examples of the silicon-containing groups include those described above for R¹ to R⁶. Specific examples include hydrocarbon-substituted silyl groups such as phenylsilyl, diphenylsilyl, trimethylsilyl, triethylsilyl, tripropylsilyl, tricyclohexylsilyl, triphenylsilyl, methyldiphenylsilyl, tritolylsilyl and trinaphthylsilyl groups; hydrocarbon-substituted silylether groups such as trimethylsilylether group; silicon-substituted alkyl groups such as trimethylsilylmethyl group; and silicon-substituted aryl groups such as trimethylsilylphenyl group.

Examples of the germanium-containing groups include those described above for R¹ to R⁶. Specific examples include groups corresponding to the aforesaid silicon-containing groups except that the silicon is replaced by germanium.

Examples of the tin-containing groups include those described above for R¹ to R⁵. Specific examples include groups corresponding to the aforesaid silicon-containing groups except that the silicon is replaced by tin.

Examples of the halogen-containing groups include, but are not limited to, fluorine-containing groups such as PF₆ and BF₄; chlorine-containing groups such as ClO₄ and SbCl₆; and iodine-containing groups such as IO₄.

Examples of the aluminum-containing groups include, but are not limited to, AlR₄ (wherein R is a hydrogen atom, an alkyl group, an aryl group which may have a substituent group, a halogen atom, or the like).

When n is 2 or greater, plural groups X may be the same or different and may be linked to each other to form a ring.

The following are illustrative and non-limiting examples of the transition metal compounds (P) of Formula (III) :

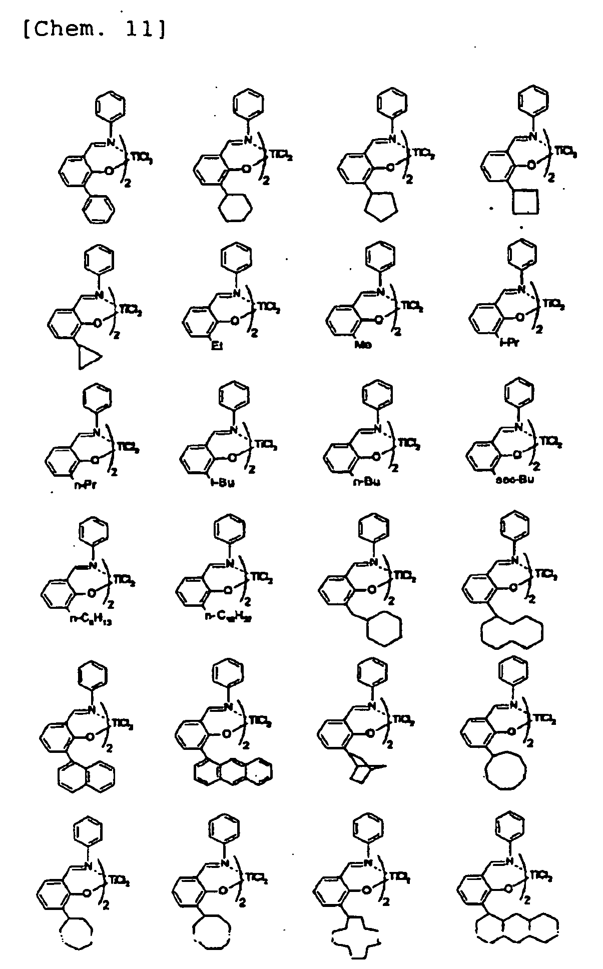

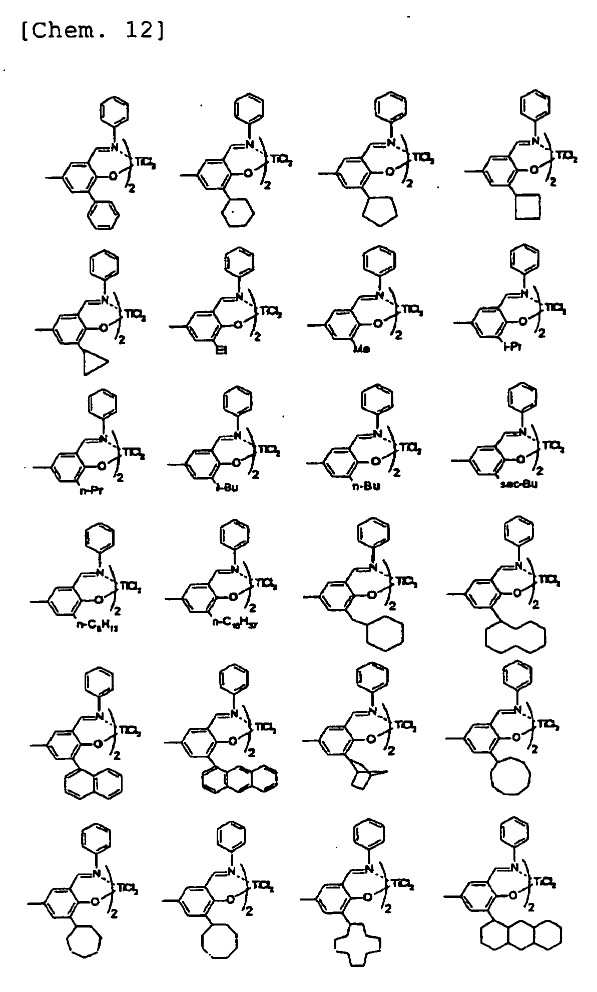

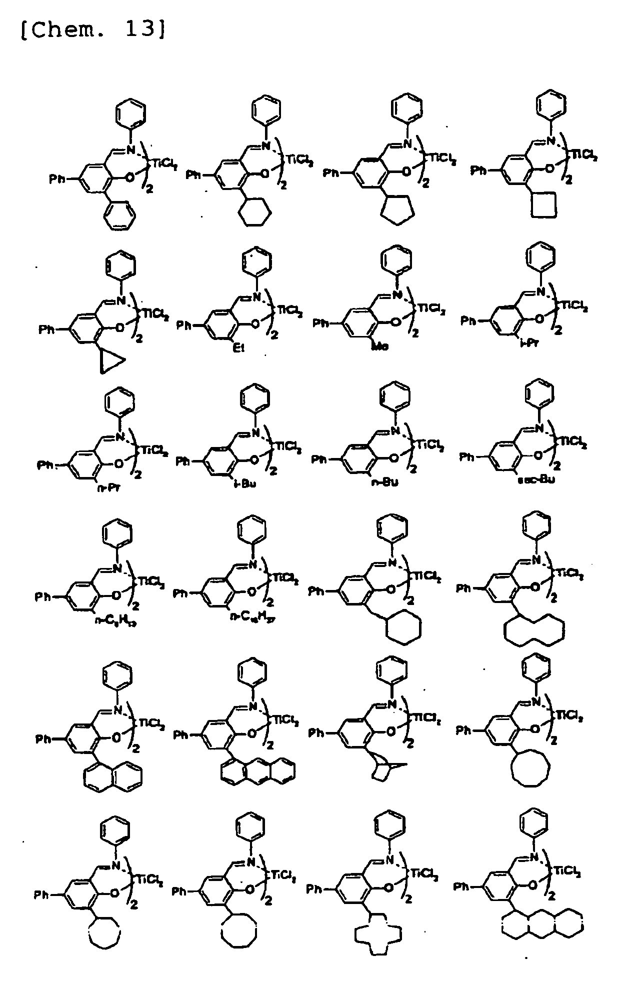

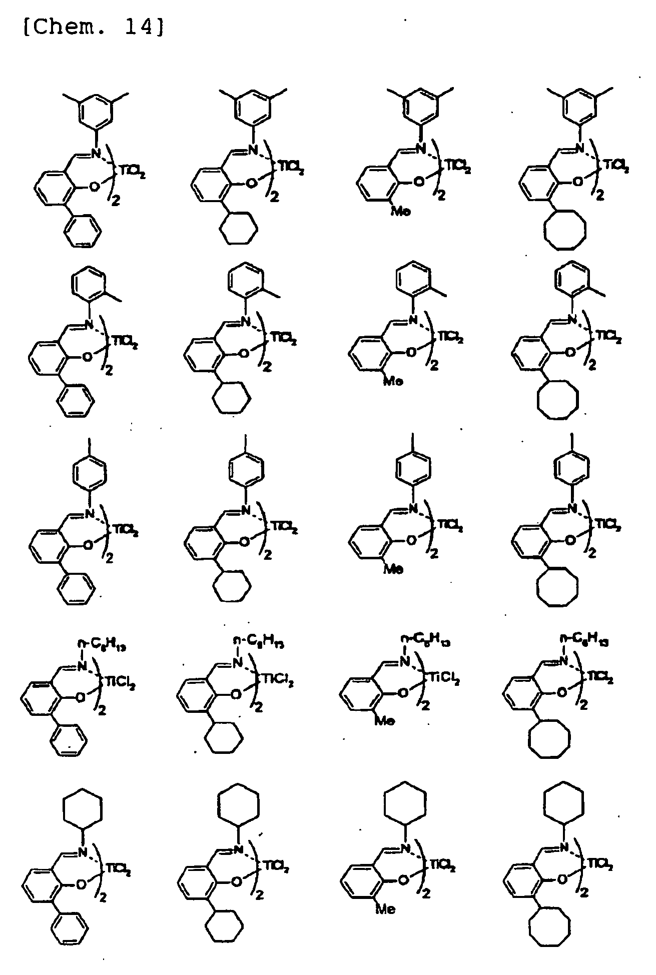

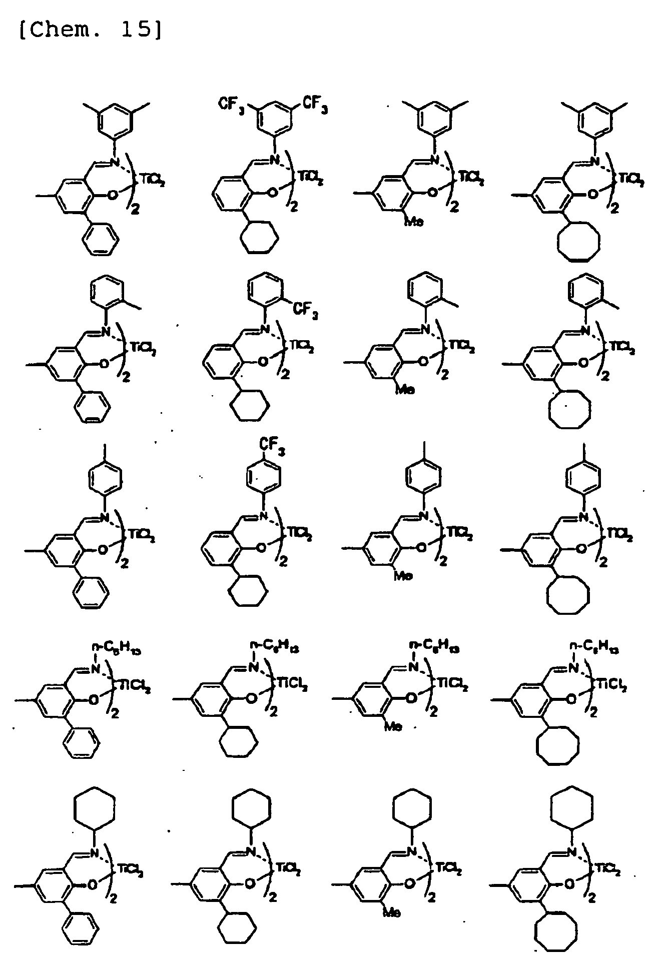

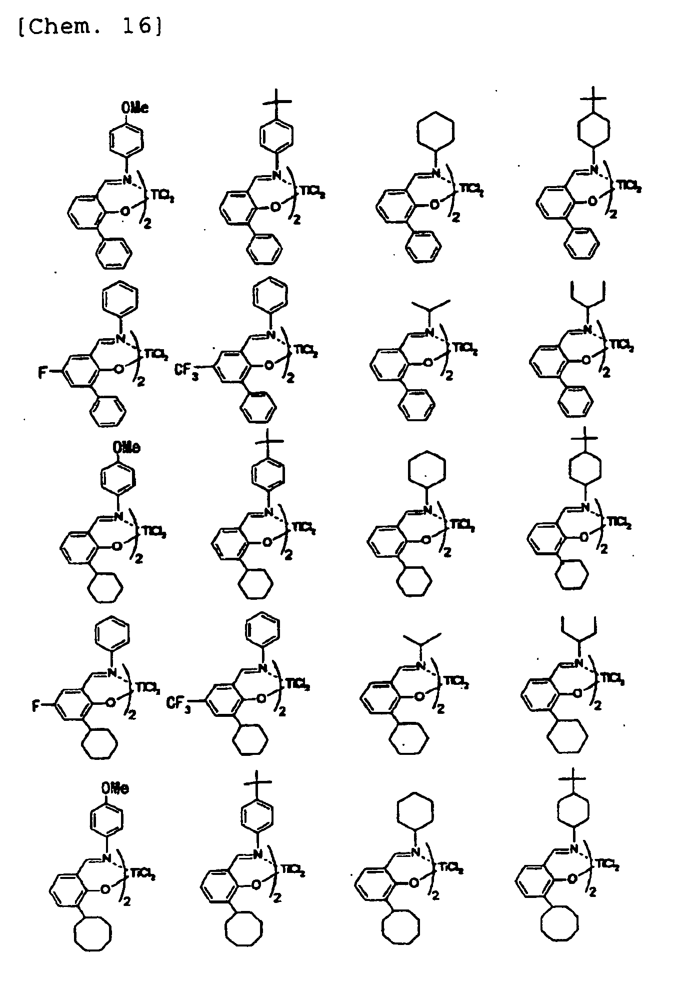

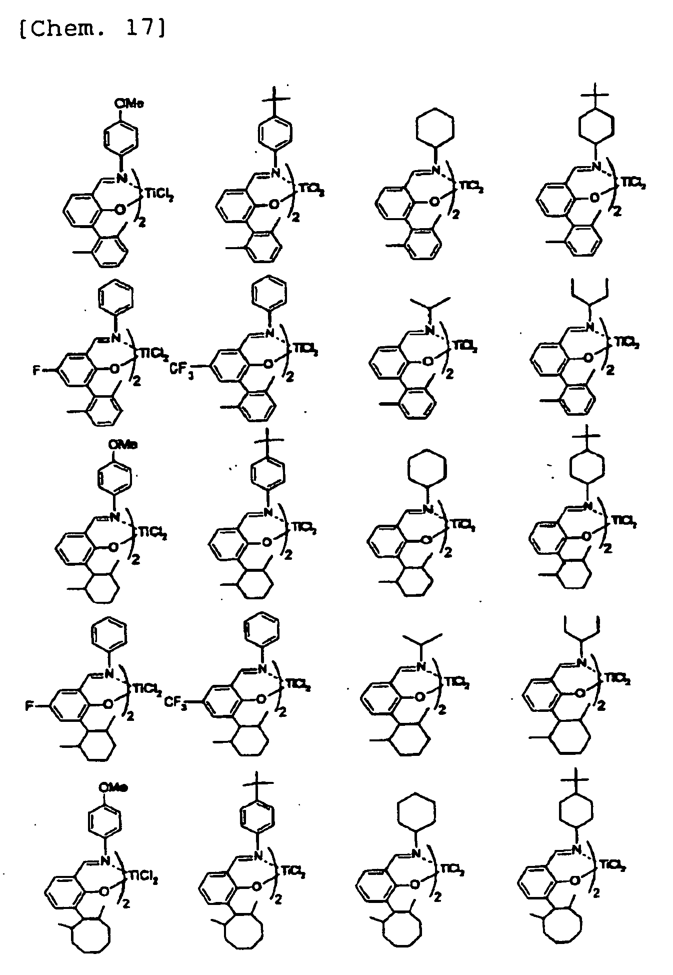

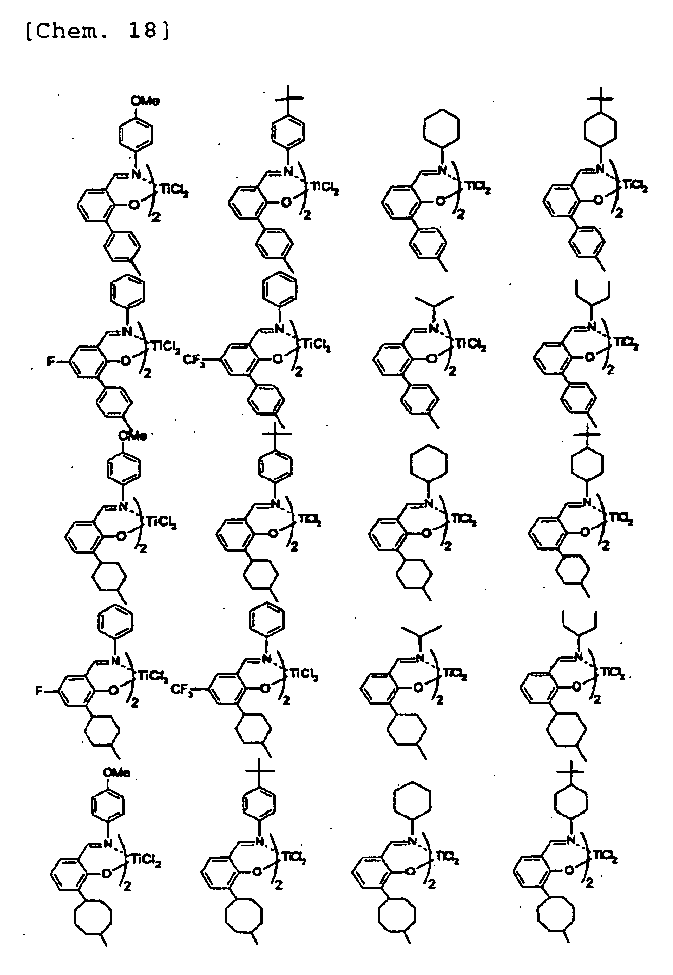

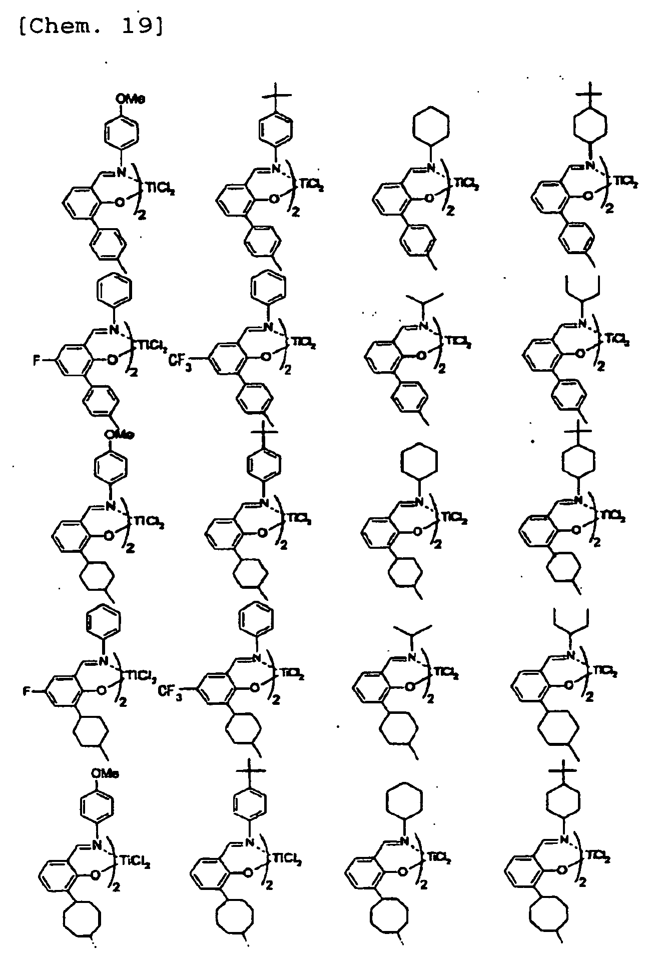

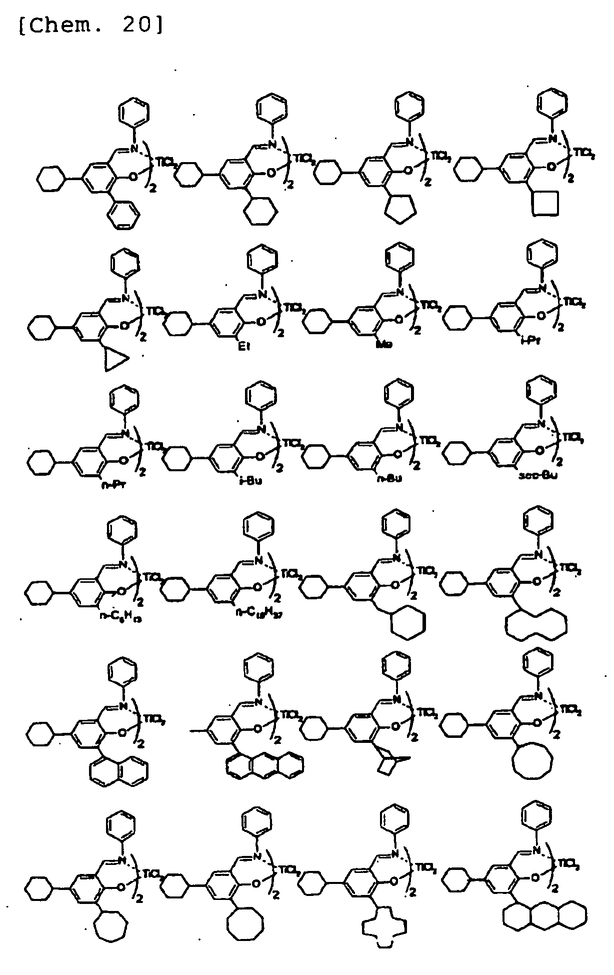

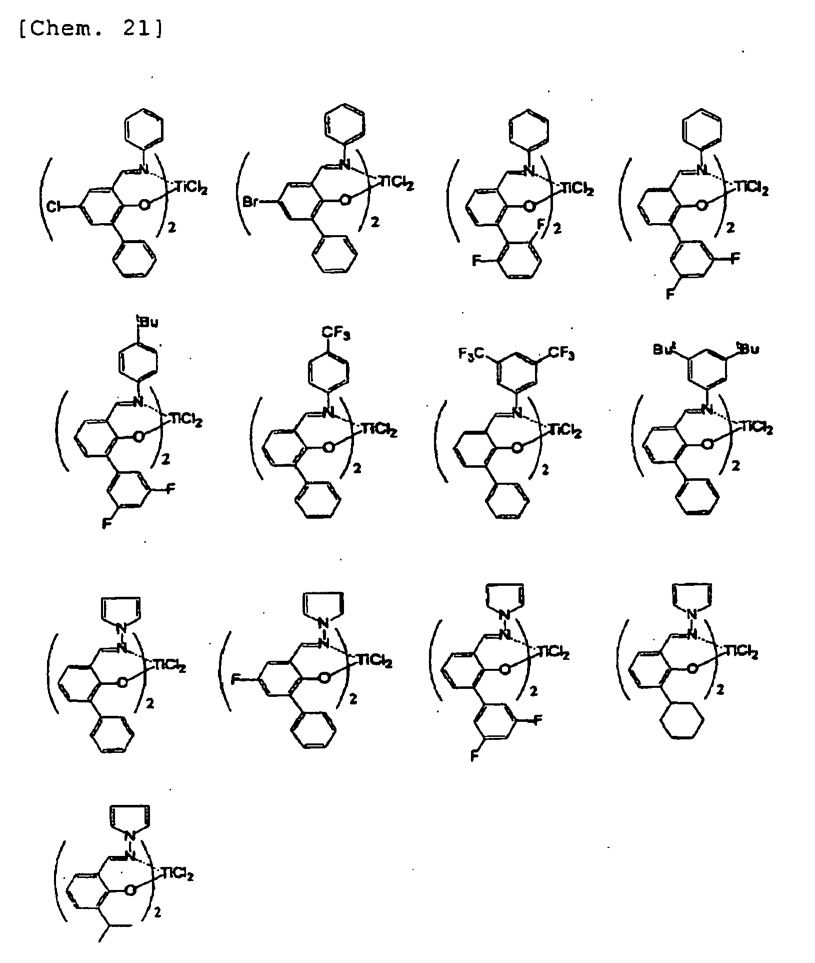

In the above formulae, Me is a methyl group, Et is an ethyl group, n-Pr is a normal propyl group, i-Pr is an isopropyl group, n-Bu is a normal butyl group, i-Bu is an isobutyl group, t-Bu is a tertiary butyl group and Ph is a phenyl group.

Processes for producing the transition metal compounds (P) are not particularly limited. An exemplary process will be described below.

First, a ligand for a transition metal compound (P) is formed by reacting a salicylaldehyde compound with a primary amine compound represented by R¹-NH₂ (wherein R¹ is as defined above), such as an alkylamine compound. Specifically, both starting compounds are dissolved in a solvent. The solvent used herein may be a common one for such reaction, but is preferably an alcohol solvent such as methanol or ethanol, or a hydrocarbon solvent such as toluene. Subsequently, the above-prepared solution is stirred at room temperature to a reflux temperature for about 1 to 48 hours to yield a corresponding ligand in a good yield. In the synthesis of the ligand compound, an acid catalyst such as formic acid, acetic acid or paratoluenesulfonic acid may be employed. Also, use of a dehydrating agent such as molecular sieve, anhydrous magnesium sulfate or anhydrous sodium sulfate, or dehydration using a Dean-Stark apparatus is effective for the progress of the reaction.

The ligand thus obtained is then reacted with a transition metal M-containing compound to synthesize a corresponding transition metal compound. Specifically, the ligand synthesized is dissolved in a solvent, and if necessary is brought into contact with a base to prepare a phenoxide salt. The resultant product is mixed with a metal compound such as a metal halide or a metal alkylate at a low temperature, and the mixture is stirred for about 1 to 48 hours at -78°C to room temperature or under reflux. The solvent used herein may be a common one for such reaction, but is preferably a polar solvent such as ether or tetrahydrofuran (THF), or a hydrocarbon solvent such as toluene. Examples of the bases used in preparing the phenoxide salt include, but not limited to, metallic salts, including lithium salts such as n-butyllithium and sodium salts such as sodium hydride, and triethylamine and pyridine.

Depending on the properties of the compound, the preparation of the phenoxide salt may be omitted, and the ligand may be directly reacted with the metal compound to give a corresponding transition metal compound. Further, the metal M in the synthesized transition metal compound may be replaced by other transition metal by a conventional method. Also, where one or more of R¹ to R⁶ are hydrogen, such hydrogen may be substituted with substituent groups other than hydrogen at an arbitrary stage in the synthesis.

The reaction solution of the ligand and the metal compound may be used directly in the polymerization without isolating the transition metal compound.

### (Q-1) Organometallic compound

The organometallic compounds (Q-1) for use in the invention are, for example, the following organometallic compounds of Groups 1, 2, 12 and 13 of the periodic table.

(Q-1a) Organoaluminum compounds represented by the formula:

R^{a}ₘAl (OR^{b}) ₙHₚX_{q}

wherein R^{a} and R^{b}, which may be the same or different, are each a hydrocarbon group of 1 to 15, preferably 1 to 4 carbon atoms, X is a halogen atom, 0<m≤3, 0≤n<3, 0≤p<3, 0≤q<3 and m+n+p+q=3.

(Q-1b) Alkyl complex compounds of Group 1 metals of the periodic Table and aluminum, represented by the formula:

M²AlR^{a}₄

wherein M² is Li, Na or K, and R^{a} is a hydrocarbon group of 1 to 15, preferably 1 to 4 carbon atoms.

(Q-1c) Dialkyl compounds of Group 2 or 12 metals of the Periodic Table, represented by the formula:

R^{a}R^{b}M³

wherein R^{a} and R^{b}, which may be the same or different, are each a hydrocarbon group of 1 to 15, preferably 1 to 4 carbon atoms, and M³ is Mg, Zn or Cd.

Examples of the organoaluminum compounds (Q-1a) include the following compounds:
Organoaluminum compounds represented by the formula:

   R^{a}ₘAl (OR^{b}) ₃₋ₘ

   wherein R^{a} and R^{b}, which may be the same or different, are each a hydrocarbon group of 1 to 15, preferably 1 to 4 carbon atoms, and 1.5≤m≤3.
Organoaluminum compounds represented by the formula:

   R^{a}ₘAlX₃₋ₘ

   wherein R^{a} is a hydrocarbon group of 1 to 15, preferably 1 to 4 carbon atoms, X is a halogen atom, and 0<m<3.
Organoaluminum compounds represented by the formula:

   R^{a}ₘAlH₃₋ₘ

   wherein R^{a} is a hydrocarbon group of 1 to 15, preferably 1 to 4 carbon atoms, and 2≤m<3.
Organoaluminum compounds represented by the formula:

   R^{a}ₘAl (OR^{b})ₙX_{q}

   wherein R^{a} and R^{b}, which may be the same or different, are each a hydrocarbon group of 1 to 15, preferably 1 to 4 carbon atoms, X is a halogen atom, 0<m≤3, 0≤n<3, 0≤q<3 and m+n+q=3.

Specific examples of the organoaluminum compounds (Q-1a) include tri-n-alkylaluminums such as trimethylaluminum, triethylaluminum, tri-n-butylaluminum, tripropylaluminum, tripentylaluminum, trihexylaluminum, trioctylaluminum and tridecylaluminum; tri-branched-chain alkylaluminums such as triisopropylaluminum, triisobutylaluminum, tri-sec-butylaluminum, tri-tert-butylaluminum, tri-2-methylbutylaluminum, tri-3-methylbutylaluminum, tri-2-methylpentylaluminum, tri-3-methylpentylaluminum, tri-4-methylpentylaluminum, tri-2-methylhexylaluminum, tri-3-methylhexylaluminum and tri-2-ethylhexylaluminum; tricycloalkylaluminums such as tricyclohexylaluminum and tricyclooctylaluminum; triarylaluminums such as triphenylaluminum and tritolylaluminum; dialkylaluminum hydrides such as diisobutylaluminum hydride; trialkenylaluminums represented by the formula (i-C₄H₉)ₓAl_{y}(C₅H₁₀)_{z} (wherein x, y and z are positive numbers, and z≥2x), such as triisoprenylaluminum; alkylaluminum alkoxides such as isobutylaluminum methoxide, isobutylaluminum ethoxide and isobutylaluminum isopropoxide; dialkylaluminum alkoxides such as dimethylaluminum methoxide, diethylaluminum ethoxide and dibutylaluminum butoxide; alkylaluminum sesquialkoxides such as ethylaluminum sesquiethoxide and butylaluminum sesquibutoxide; partially alkoxylated alkylaluminums having an average composition represented by R^{a}_{2.5}Al(OR^{b})_{0.5}; dialkylaluminum aryloxides such as diethylaluminum phenoxide, diethylaluminum(2,6-di-t-butyl-4-methylphenoxide), ethylaluminum bis(2,6-di-t-butyl-4-methylphenoxide), diisobutylalumium(2,6-di-t-butyl-4-methylphenoxide) and isobutylaluminum bis(2,6-di-t-butyl-4-methylphenoxide); dialkylaluminum halides such as dimethylaluminum chloride, diethylaluminum chloride, dibutylaluminum chloride, diethylaluminum bromide and diisobutylaluminum chloride; alkylaluminum sesquihalides such as ethylaluminum sesquichloride, butylaluminum sesquichloride and ethylaluminum sesquibromide; partially halogenated alkylaluminums such as alkylaluminum dihalides, including ethylaluminum dichloride, propylaluminum dichloride and butylaluminum dibromide; dialkylaluminum hydrides such as diethylaluminum hydride and dibutylaluminum hydride; partially hydrogenated alkylaluminums such as alkylaluminum dihydrides, including ethylaluminum dihydride and propylaluminum dihydride; and partially alkoxylated and halogenated alkylaluminums such as ethylaluminum ethoxychloride, butylaluminum butoxychloride and ethylaluminum ethoxybromide.

Also employable are compounds analogous to the organoaluminum compounds (Q-1a). Examples are organoaluminum compounds in which two or more aluminum compounds are combined through a nitrogen atom, such as (C₂H₅) ₂AlN (C₂H₅) Al (C₂H₅)₂.

Examples of the compounds (Q-1b) include those represented by LiAl (C₂H₅) ₄ and LiAl (C₇H₁₅) ₄. Further, other compounds are also employable as the organometallic compounds (Q-1), with examples including methyllithium, ethyllithium, propyllithium, butyllithium, methylmagnesium bromide, methylmagnesium chloride, ethylmagnesium bromide, ethylmagnesium chloride, propylmagnesium bromide, propylmagnesium chloride, butylmagnesium bromide, butylmagnesium chloride, dimethylmagnesium, diethylmagnesium, dibutylmagnesium and butylethylmagnesium.

Furthermore, combinations of compounds capable of forming the aforesaid organoaluminum compounds in the polymerization system are also employable, with examples including combinations of aluminum halides and alkyllithiums and combinations of aluminum halides and alkylmagnesiums.

Of the organometallic compounds (Q-1) mentioned above, the organoaluminum compounds are preferable.

The organometallic compounds (Q-1) may be used singly or in combination of two or more kinds.

### (Q-2) Organoaluminum oxy-compound

The organoaluminum oxy-compounds (Q-2) for use in the invention may be conventional aluminoxanes or benzene-insoluble organoaluminum oxy-compounds as described in JP-A-H2-78687.

The conventional aluminoxanes may be prepared by, for example, the following processes, and are usually obtained as solutions in hydrocarbon solvents.
(1) An organoaluminum compound such as trialkylaluminum is added to a hydrocarbon suspension of a compound containing adsorbed water or a salt containing water of crystallization, such as magnesium chloride hydrate, copper sulfate hydrate, aluminum sulfate hydrate, nickel sulfate hydrate or cerous chloride hydrate, thereby to react the adsorbed water or water of crystallization with the organoaluminum compound.
(2) Water, ice or water vapor is allowed to act directly on an organoaluminum compound such as trialkylaluminum in a medium such as benzene, toluene, ethyl ether or tetrahydrofuran.
(3) An organotin oxide such as dimethyltin oxide or dibutyltin oxide is allowed to react with an organoaluminum compound such as trialkylaluminum in a medium such as decane, benzene or toluene.

The aluminoxanes may contain a small amount of an organometallic component. After the solvent or the unreacted organoaluminum compound is distilled off from the recovered solution of the aluminoxane, the remainder may be redissolved in a solvent or suspended in a poor solvent for the aluminoxane.

Examples of the organoaluminum compounds used in preparing the aluminoxanes include the same organoaluminum compounds described as the organoaluminum compounds (Q-1a).

Of these, the trialkylaluminums and tricycloalkylaluminums are preferable, and trimethylaluminum and triisobutylaluminum are particularly preferable.

The organoaluminum compounds may be used singly or in combination of two or more kinds.

Examples of the solvents used in the preparation of the aluminoxanes include aromatic hydrocarbons such as benzene, toluene, xylene, cumene and cymene; aliphatic hydrocarbons such as pentane, hexane, heptane, octane, decane, dodecane, hexadecane and octadecane; alicyclic hydrocarbons such as cyclopentane, cyclohexane, cyclooctane and methylcyclopentane; petroleum fractions such as gasoline, kerosine and gas oil; and halides of these aromatic, aliphatic and alicyclic hydrocarbons, particularly chlorides and bromides thereof. Also employable are ethers such as ethyl ether and tetrahydrofuran. Of the solvents, the aromatic hydrocarbons and aliphatic hydrocarbons are particularly preferable.

In the benzene-insoluble organoaluminum oxy-compound used in the invention, the content of Al component which dissolves in benzene at 60°C is usually not more than 10%, preferably not more than 5%, and particularly preferably not more than 2%, in terms of Al atom. That is, the benzene-insoluble organoaluminum oxy-compound is preferably insoluble or hardly soluble in benzene.

The organoaluminum oxy-compound employed in the invention is, for example, a boron-containing organoaluminum oxy-compound represented by Formula (IV) below: 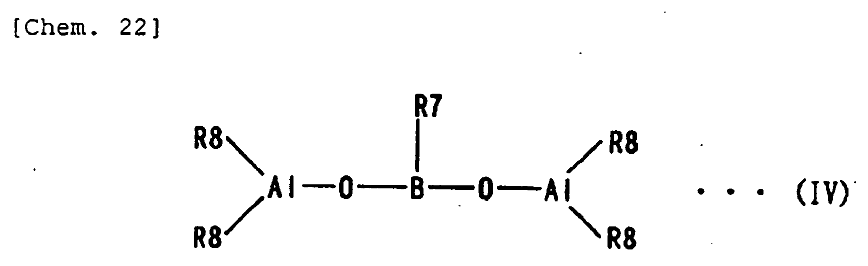 wherein R⁷ is a hydrocarbon group of 1 to 10 carbon atoms, and the groups R⁸ may be the same or different and are each a hydrogen atom, a halogen atom or a hydrocarbon group of 1 to 10 carbon atoms.

The boron-containing organoaluminum oxy-compound of Formula (IV) may be prepared by reacting an alkylboronic acid represented by Formula (V) below with an organoaluminum compound in an inert solvent under an inert gas atmosphere at a temperature of -80°C to room temperature for 1 minute to 24 hours:

R⁷-B(OH)₂ (V)

wherein R⁷ is the same as mentioned above.

Examples of the alkylboronic acids represented by Formula (V) include methylboronic acid, ethylboronic acid, isopropylboronic acid, n-propylboronic acid, n-butylboronic acid, isobutylboronic acid, n-hexylboronic acid, cyclohexylboronic acid, phenylboronic acid, 3,5-difluoroboronic acid, pentafluorophenylboronic acid and 3,5-bis(trifluoromethyl)phenylboronic acid. Of these, methylboronic acid, n-butylboronic acid, isobutylboronic acid, 3,5-difluorophenylboronic acid and pentafluorophenylboronic acid are preferable. These alkylboronic acids may be used singly or in combination of two or more kinds.

Examples of the organoaluminum compounds that are reacted with the alkylboronic acids include the same organoaluminum compounds described as the organoaluminum compounds (Q-1a).

Of these, the trialkylaluminums and tricycloalkylaluminums are preferable, and trimethylaluminum, triethylaluminum and triisobutylaluminum are particularly preferable. These organoaluminum compounds may be used singly or in combination of two or more kinds.

The organoaluminum oxy-compounds (Q-2) described above may be used singly or in combination of two or more kinds. (Q-3) Compound that reacts with the transition metal compound (P) to form ion pair

Examples of the compounds (Q-3) that react with the transition metal compound (P) to form an ion pair (hereinafter, referred to as "ionizing ionic compounds") include Lewis acids, ionic compounds, borane compounds and carborane compounds described in JP-A-H1-501950, JP-A-H1-502036, JP-A-H3-179005, JP-A-H3-179006, JP-A-H3-207703, JP-A-H3-207704, and U.S. Patent No. 5,321,106. Further, heteropoly compounds and isopoly compounds are also employable.

Examples of the Lewis acids include compounds represented by BR₃ (wherein R is a phenyl group which may have a substituent group such as fluorine, methyl or trifluoromethyl, or is a fluorine atom), such as trifluoroboron, triphenylboron, tris(4-fluorophenyl)boron, tris(3,5-difluorophenyl)boron, tris(4-fluoromethylphenyl)boron, tris(pentafluorophenyl)boron, tris(p-tolyl)boron, tris(o-tolyl)boron and tris(3,5-dimethylphenyl)boron.

Examples of the ionic compounds include compounds represented by Formula (VI): 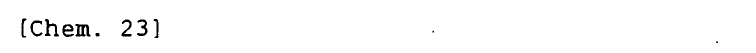 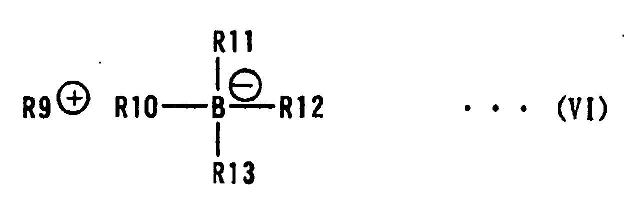 wherein R⁹⁺ is H⁺ or a cation; and R¹⁰ to R¹³ may be the same or different and are each an organic group, preferably an aryl group or a substituted aryl group. Examples of the cations include carbonium cations, oxonium cations, ammonium cations, phosphonium cations, cycloheptyltrienyl cations and ferrocenium cations having a transition metal.

R¹⁰ to R¹³ may be the same or different and are each an organic group, preferably an aryl group or a substituted aryl group.

The carbonium cations include tri-substituted carbonium cations such as triphenylcarbonium cation, tri(methylphenyl)carbonium cation and tri(dimethylphenyl)carbonium cation.

The ammonium cations include trialkylammonium cations such as trimethylammonium cation, triethylammonium cation, tripropylammonium cation, tributylammonium cation and tri(n-butyl)ammonium cation; N,N-dialkylanilinium cations such as N,N-dimethylanilinium cation, N,N-diethylanilinium cation and N,N-2,4,6-pentamethylanilinium cation; and dialkylammonium cations such as di (isopropyl) ammonium cation and dicyclohexylammonium cation.

The phosphonium cations include triarylphosphonium cations such as triphenylphosphonium cation, tri(methylphenyl)phosphonium cation and tri(dimethylphenyl)phosphonium cation.

R⁹⁺ is preferably carbonium cation or ammonium cation, and is particularly preferably triphenylcarbonium cation, N, N-dimethylanilinium cation or N, N-diethylanilinium cation.

Examples of the ionic compounds further include trialkyl-substituted ammonium salts, N,N-dialkylanilinium salts, dialkylammonium salts and triarylphosphonium salts.

The trialkyl-substituted ammonium salts include triethylammoniumtetra(phenyl) borate, tripropylammoniumtetra(phenyl) borate, tri(n-butyl)ammoniumtetra(phenyl) borate, trimethylammoniumtetra(p-tolyl) borate, trimethylammoniumtetra(o-tolyl) borate, tri(n-butyl)ammoniumtetra(pentafluorophenyl) borate, tripropylammoniumtetra(o,p-dimethylphenyl) borate, tri(n-butyl)ammoniumtetra(m,m-dimethylphenyl) borate, tri(n-butyl)ammoniumtetra(p-trifluoromethylphenyl) borate, tri(n-butyl)ammoniumtetra(3,5-ditrifluoromethylphenyl) borate and tri(n-butyl)ammoniumtetra(o-tolyl) borate.

The N,N-dialkylanilinium salts include N,N-dimethylaniliniumtetra(phenyl) borate, N,N-diethylaniliniumtetra(phenyl) borate and N,N-2,4,6-pentamethylaniliniumtetra(phenyl) borate.

The dialkylammonium salts include di(1-propyl)ammoniumtetra(pentafluorophenyl) borate and dicyclohexylammoniumtetra(phenyl) borate.

Examples of the ionic compounds further include triphenylcarbeniumtetrakis(pentafluorophenyl) borate, N,N-dimethylaniliniumtetrakis(pentafluorophenyl) borate, ferroceniumtetra(pentafluorophenyl) borate, triphenylcarbeniumpentaphenylcyclopentadienyl complex, N,N-diethylaniliniumpentaphenylcyclopentadienyl complex and boron compounds represented by Formulae (VII) and (VIII) below: 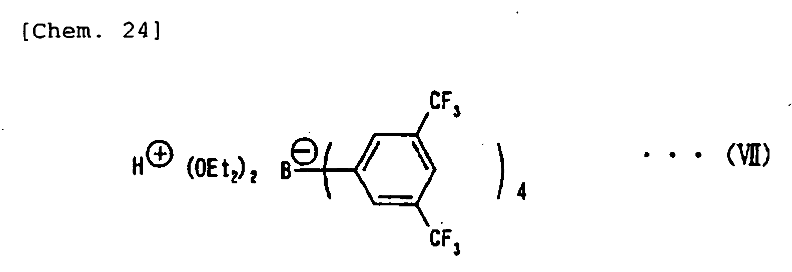 wherein Et is an ethyl group; 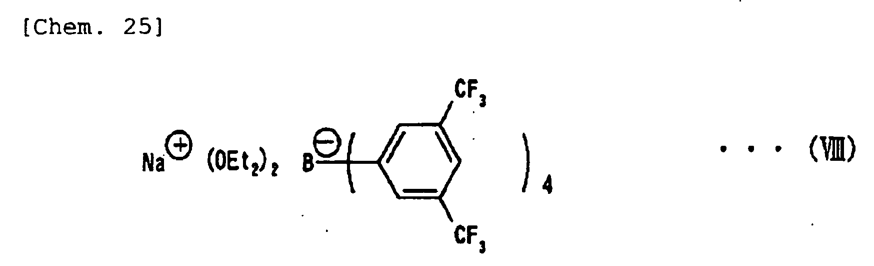 wherein Et is an ethyl group.

Examples of the borane compounds include decaborane; salts of anions, such as bis [tri (n-butyl) ammonium] nonaborate, bis[tri(n-butyl)ammonium] decaborate, bis[tri(n-butyl)ammonium] undecaborate, bis[tri(n-butyl)ammonium] dodecaborate, bis[tri(n-butyl)ammonium] decachlorodecaborate and bis[tri(n-butyl)ammonium] dodecachlorododecaborate; and salts of metallic borane anions, such as tri(n-butyl)ammoniumbis(dodecahydridododecaborato) cobaltate (III) and bis[tri(n-butyl)ammonium]bis(dodecahydridododecaborato) nickelate (III).

Examples of the carborane compounds include salts of anions, such as 4-carbanonaborane, 1,3-dicarbanonaborane, 6,9-dicarbadecaborane, dodecahydrido-1-phenyl-1,3-dicarbanonaborane, dodecahydrido-1-methyl-1,3-dicarbanonaborane, undecahydrido-1,3-dimethyl-1,3-dicarbanonaborane, 7,8-dicarbaundecaborane, 2,7-dicarbaundecaborane, undecahydrido-7,8-dimethyl-7,8-dicarbaundecaborane, dodecahydrido-11-methyl-2,7-dicarbaundecaborane, tri(n-butyl)ammonium-1-carbadecaborate, tri(n-butyl)ammonium-1-carbaundecaborate, tri(n-butyl)ammonium-1-carbadodecaborate, tri(n-butyl)ammonium-1-trimethylsilyl-1-carbadecaborate, tri(n-butyl)ammoniumbromo-1-carbadodecaborate, tri(n-butyl)ammonium-6-carbadecaborate, tri(n-butyl)ammonium-6-carbadecaborate, tri(n-butyl)ammonium-7-carbaundecaborate, tri(n-butyl)ammonium-7,8-dicarbaundecaborate, tri(n-butyl)ammonium-2,9-dicarbaundecaborate, tri(n-butyl)ammoniumdodecahydrido-8-methyl-7,9-dicarbaundecaborate, tri(n-butyl)ammoniumundecahydrido-8-ethyl-7,9-dicarbaundecaborate, tri(n-butyl)ammoniumundecahydrido-8-butyl-7,9-dicarbaundecaborate, tri(n-butyl)ammoniumundecahydrido-8-allyl-7,9-dicarbaundecaborate, tri(n-butyl)ammoniumundecahydrido-9-trimethylsilyl-7,8-dicarbaundecaborate and tri(n-butyl)ammoniumundecahydrido-4,6-dibromo-7-carbaundecaborate; and salts of metallic carborane anions, such as tri(n-butyl)ammoniumbis(nonahydrido-1,3-dicarbanonaborato) cobaltate (III), tri (n-butyl)ammoniumbis(undecahydrido-7,8-dicarbaundecaborato) ferrate (III), tri(n-butyl)ammoniumbis (undecahydrido-7,8-dicarbaundecaborato) cobaltate (III), tri(n-butyl)ammoniumbis(undecahydrido-7,8-dicarbaundecaborato) nickelate (III), tri(n-butyl)ammoniumbis(undecahydrido-7,8-dicarbaundecaborato) cuprate (III), tri(n-butyl)ammoniumbis(undecahydrido-7,8-dicarbaundecaborato) aurate (III), tri(n-butyl)ammoniumbis(nonahydrido-7,8-dimethyl-7,8-dicarbaundecaborato) ferrate (III), tri(n-butyl)ammoniumbis(nonahydrido-7,8-dimethyl-7,8-dicarbaundecaborato) chromate (III), tri(n-butyl)ammoniumbis(tribromooctahydrido-7,8-dicarbaundecaborato) cobaltate (III), tris[tri(n-butyl)ammonium]bis(undecahydrido-7-carbaundecaborato) chromate (III), bis[tri(n-butyl)ammonium]bis(undecahydrido-7-carbaundecaborato) manganate (IV), bis[tri(n-butyl)ammonium]bis(undecahydrido-7-carbaundecaborato) cobaltate (III) and bis[tri(n-butyl)ammonium]bis(undecahydrido-7-carbaundecaborato) nickelate (IV).

The heteropoly compounds are composed of an atom selected from silicon, phosphorus, titanium, germanium, arsenic and tin, and one or more atoms selected from vanadium, niobium, molybdenum and tungsten. Specific examples thereof include, but are not limited to, phosphovanadic acid, germanovanadic acid, arsenovanadic acid, phosphoniobic acid, germanoniobic acid, siliconomolybdic acid, phosphomolybdic acid, titanomolybdic acid, germanomolybdic acid, arsenomolybdic acid, stannomolybdic acid, phosphotungstic acid, germanotungstic acid, stannotungstic acid, phosphomolybdovanadic acid, phosphotungstovanadic acid, germanotungstovanadic acid, phosphomolybdotungstovanadic acid, germanomolybdotungstovanadic acid, phosphomolybdotungstic acid, phosphomolybdoniobic acid, salts of these acids with for example Group 1 or 2 metals of the periodic table such as lithium, sodium, potassium, rubidium, cesium, beryllium, magnesium, calcium, strontium and barium, and organic salts of these acids with for example triphenylethyl salt.

The ionizing ionic compounds (Q-3) capable of reacting with the transition metal compound (P) to form an ion pair may be used singly or in combination of two or more kinds.

When the transition metal compound (P) of the invention is used as catalyst in combination with the organoaluminum oxy-compound (Q-2) such as methylaluminoxane as cocatalyst, the catalyst system shows very high polymerization activity for olefin compounds.

The olefin polymerization catalyst of the present invention may contain a carrier (R) described below as required, together with the transition metal compound (P) and at least one compound (Q) selected from the organometallic compound (Q-1), the organoaluminum oxy-compound (Q-2) and the compound (Q-3) that reacts with the transition metal compound (P) to form an ion pair.

### (R) Carrier

The carrier (R) used in the invention is an inorganic or organic compound in the form of granular or fine particulate solid. Preferred inorganic compounds include porous oxides, inorganic chlorides, clays, clay minerals and ion-exchange layered compounds.

Examples of the porous oxides include SiO₂, Al₂O₃, MgO, ZrO, TiO₂, B₂O₃, CaO, ZnO, BaO, ThO₂, and complexes and mixtures containing them, such as natural or synthetic zeolites, SiO₂-MgO, SiO₂-Al₂O₃, SiO₂-TiO₂, SiO₂-V₂O₅, SiO₂-Cr₂O₃ and SiO₂-TiO₂-MgO. Of these, those based on SiO₂ and/or Al₂O₃ are preferable. The inorganic oxides may contain small amounts of carbonate, sulfate, nitrate or oxide components such as Na₂CO₃, K₂CO₃, CaCO₃, MgCO₃, Na₂SO₄, Al₂(SO₄)₃, BaSO₄, KNO₃, Mg(NO₃)₂, Al(NO₃)₃, Na₂O, K₂O and Li₂O.

Although these porous oxides have various properties depending on the type and preparation process thereof, the carrier suitable for use in the invention has particle diameters of 10 to 300 µm, preferably 20 to 200 µm, specific surface areas of 50 to 1000 m²/g, preferably 100 to 700 m²/g, and pore volumes of 0.3 to 3.0 cm³/g. Where necessary, the carrier may be calcined at 100 to 1000°C, and preferably 150 to 700°C before use.

Examples of the inorganic chlorides include MgCl₂, MgBr₂, MnCl₂ and MnBr₂. The inorganic chlorides may be used as they are or after pulverized by a ball mill, a vibration mill or the like. Also, the inorganic chlorides may be dissolved in a solvent such as an alcohol and then precipitated into fine particles with a precipitating agent.

The clays for use in the invention are generally comprised of a clay mineral as a major ingredient. The ion-exchange layered compounds have a crystal structure in which planes formed by ionic bonding pile on one another in parallel with a weak bond strength, and they contain exchangeable ions. Most clay minerals are ion-exchange layered compounds. The clays, the clay minerals and the ion-exchange layered compounds are not limited to naturally occurring compounds, and synthetic compounds may be used in the invention.

Examples of such clays, clay minerals and ion-exchange layered compounds include clays, clay minerals, and ionic crystalline compounds having such a layered crystal structure as a hexagonal closest packing structure, an antimony structure, a CdCl₂ structure or a CdI₂ structure.

Specific examples of the clays and the clay minerals include kaolin, bentonite, kibushi clay, potter's clay, allophane, hisingerite, pyrophyllite, mica group, montmorillonite group, vermiculite, chlorite group, palygorskite, kaolinite, nacrite, dickite and halloysite. Specific examples of the ion-exchange layered compounds include crystalline acid salts of polyvalent metals, such as α-Zr(HAsO₄)₂·H₂O, α-Zr(HPO₄)₂, α-Zr(KPO₄)₂·3H₂O, α-Ti(HPO₄)₂, α-Ti(HAsO₄)₂·H₂O, α-Sn(HPO₄)₂·H₂O, γ-Zr(HPO₄)₂, γ-Ti(HPO₄)₂ and γ-Ti(NH₄PO₄)₂·H₂O.

The clays, the clay minerals and the ion-exchange layered compounds preferably have pore volumes, as measured on pores having a radius of not less than 20 Å by a mercury penetration method, of 0.1 cc/g or more, particularly preferably from 0.3 to 5 cc/g. The pore volume is measured on the pores having a radius of 20 to 30000 Å by a mercury penetration method using a mercury porosimeter. When the carrier used has a pore volume of less than 0.1 cc/g as measured on pores of 20 Å or more in radius, it is often difficult to obtain high polymerization activity.

It is preferable that the clays and the clay minerals are chemically treated. Any chemical treatment may be used, with examples including a surface treatment to remove impurities attached to the surface and a treatment to affect the crystal structure of the clay. Specific examples of such chemical treatments include acid treatment, alkali treatment, salt treatment and organic matter treatment. The acid treatment not only removes impurities from the surface but also increases the surface area by eluting cations such as of Al, Fe and Mg from the crystal structure. The alkali treatment destroys the crystal structure of the clay to bring about change in clay structure. The salt treatment and the organic matter treatment result in formation of an ionic complex, a molecular complex or an organic derivative, and consequently the surface area or interlayer distance is altered.

The ion-exchange layered compound may be enlarged in interlayer distance by changing the exchangeable ions between layers with other larger and bulkier ions by means of ion exchange properties. The bulky ions play a pillar-like roll to support the layered structure and are called "pillars". Introduction of other substances between layers of a layered compound is called "intercalation". Examples of the guest compounds to be intercalated include cationic inorganic compounds such as TiCl₄ and ZrCl₄; metallic alkoxides such as Ti(OR)₄, Zr(OR)₄, PO (OR)₃ and B (OR)₃ (wherein R is a hydrocarbon group or the like); and metallic hydroxide ions such as [Al₁₃O₄(OH)₂₄]⁷⁺, [Zr₄(OH)₁₄]²⁺ and [Fe₃O(OCOCH₃)₆]⁺. These compounds may be used singly or in combination of two or more kinds. Intercalation of these compounds may be carried out in the presence of polymers obtained by hydrolysis of metallic alkoxides such as Si(OR)₄, Al(OR)₃ and Ge(OR)₄ (wherein R is a hydrocarbon group or the like) or in the presence of colloidal inorganic compounds such as SiO₂. Examples of the pillars include oxides resulting from thermal dehydration of the above-mentioned metallic hydroxide ions intercalated between layers.

The clays, the clay minerals and the ion-exchange layered compounds mentioned above may be used as they are or after treated by, for example, ball milling or sieving. Moreover, they may be used after subjected to water adsorption or thermal dehydration. The clays, the clay minerals and the ion-exchange layered compounds may be used singly or in combination of two or more kinds.

Of the above-mentioned compounds, the clays and the clay minerals are preferred, and montmorillonite, vermiculite, pectolite, tenorite and synthetic mica are particularly preferable.

Examples of the organic compounds include granular or fine particulate solids ranging from 10 to 300 µm in particle diameter. Specific examples thereof include (co)polymers mainly composed of an α-olefin of 2 to 14 carbon atoms such as ethylene, propylene, 1-butene or 4-methyl-1-pentene, (co)polymers mainly composed of vinylcyclohexane or styrene, and modified products thereof.

In carrying out polymerization, the usage and order of addition of the components may be selected arbitrarily. Some exemplary processes are given below:
(1) The component (P) alone is added to a polymerizer.
(2) The component (P) and the component (Q) are added to a polymerizer in an arbitrary order.
(3) A catalyst component in which the component (P) is supported on the carrier (R), and the component (Q) are added to a polymerizer in an arbitrary order.
(4) A catalyst component in which the component (Q) is supported on the carrier (R), and the component (P) are added to a polymerizer in an arbitrary order.
(5) A catalyst component in which the components (P) and (Q) are supported on the carrier (R) is added to a polymerizer.

In the processes (2) to (5), two or more of the catalyst components may be brought into contact with each other beforehand.

In the processes (4) and (5) in which the component (Q) is supported on the carrier, a component (Q) that is not supported may be added as required at an arbitrary stage. In this case, these components (Q) may be the same or different.

The solid catalyst component wherein the component (P) alone or the components (P) and (Q) are supported on the component (R) may be prepolymerized with an olefin. Also, an additional catalyst component may be supported on the prepolymerized solid catalyst component.

In the olefin polymerization processes according to the invention, the olefins are polymerized or copolymerized in the presence of the above-described olefin polymerization catalyst to give an olefin polymer.

The polymerization may be carried out by any of liquid-phase polymerization processes such as solution polymerization and suspension polymerization, and gas-phase polymerization processes. The liquid-phase polymerization may employ an inert hydrocarbon medium, and examples thereof include aliphatic hydrocarbons such as propane, butane, pentane, hexane, heptane octane, decane, dodecane and kerosine; alicyclic hydrocarbons such as cyclopentane, cyclohexane and methylcyclopentane; aromatic hydrocarbons such as benzene, toluene and xylene; halogenated hydrocarbons such as ethylene chloride, chlorobenzene and dichloromethane; and mixtures thereof. The olefin itself may be used as the solvent.

In the olefin polymerization with use of the olefin polymerization catalyst, the component (P) is generally used in an amount of 10⁻¹² to 10⁻² mol, and preferably 10⁻¹⁰ to 10⁻³ mol per liter of the reaction volume.

When the component (Q-1) is used, the amount thereof is such that the molar ratio ((Q-1)/(M)) of the component (Q-1) to all the transition metal atoms (M) in the component (P) is 0.01 to 100000, and preferably 0.05 to 50000. When the component (Q-2) is used, the amount thereof is such that the molar ratio ((Q-2)/(M)) of the aluminum atoms in the component (Q-2) to all the transition metal atoms (M) in the component (P) is 10 to 500000, and preferably 20 to 100000. When the component (B-3) is used, the amount thereof is such that the molar ratio ((Q-3)/(M)) of the component (Q-3) to all the transition metal atoms (M) in the component (P) is 1 to 10, and preferably 1 to 5.

In the olefin polymerization with use of the olefin polymerization catalyst, the polymerization temperature is generally in the range of from -50 to +200°C, and preferably from 0 to 170°C. The polymerization pressure is generally in the range of atmospheric pressure to 100 kg/cm², and preferably atmospheric pressure to 50 kg/cm². The polymerization may be carried out batchwise, semi-continuously or continuously. It is also within the scope of the invention to carry out the polymerization in two or more stages under different reaction conditions.

The molecular weight of the obtainable olefin polymer may be controlled by adding hydrogen to the polymerization system, by altering the polymerization.temperature, or by changing the amount of the component (Q).

The α-olefin/non-conjugated cyclic polyene copolymer (A) in the invention may be graft-modified with a polar monomer such as an unsaturated carboxylic acid or a derivative thereof (e.g., acid anhydride or ester) . Examples of the unsaturated carboxylic acids include acrylic acid, methacrylic acid, maleic acid, fumaric acid, itaconic acid, citraconic acid, tetrahydrophthalic acid and bicyclo(2,2,1)hept-2-ene-5,6-dicarboxylic acid.

Examples of the unsaturated carboxylic acid anhydrides include maleic anhydride, itaconic anhydride, citraconic anhydride, tetrahydrophthalic anhydride and bicyclo(2,2,1)hept-2-ene-5,6-dicarboxylic anhydride. Of these, maleic anhydride is preferable.

Examples of the unsaturated carboxylic acid esters include methyl acrylate, methyl methacrylate, dimethyl maleate, monomethyl maleate, dimethyl fumarate, dimethyl itaconate, diethyl citraconate, dimethyl tetrahydrophthalate and dimethyl bicyclo(2,2,1)hept-2-ene-5,6-dicarboxylate. Of these, methyl acrylate and ethyl acrylate are preferable.

The graft modifiers (graft monomers), such as the above unsaturated carboxylic acids, may be used singly or in combination of two or more kinds. In any case, they are suitably used in an amount of not more than 0.1 mol based on 100 g of the α-olefin/non-conjugated cyclic polyene copolymer (A) prior to the graft modification.

When the α-olefin/non-conjugated cyclic polyene copolymer (A) has the above graft amount, the obtainable polymer composition will have excellent flowability (forming processability) and will provide crosslinked shaped articles having superior low-temperature resistance.

The graft-modified α-olefin/non-conjugated cyclic polyene copolymer (A) may be obtained by allowing the unmodified α-olefin/non-conjugated cyclic polyene copolymer (A) to react with the unsaturated carboxylic acid or derivative thereof in the presence of a radical initiator.

The graft reaction may be carried out in a solution state or a molten state. When the graft reaction is performed in a molten state, it is most efficient and preferable to conduct the reaction continually in an extruder.

Examples of the radical initiators used in the graft reaction include dialkyl peroxides such as dicumyl peroxide, di-t-butyl peroxide, di-t-butylperoxy-3,3,5-trimethylcyclohexane, t-butylcumyl peroxide, di-t-amyl peroxide, t-butyl hydroperoxide, 2,5-dimethyl-2,5-di(t-butylperoxy)hexyne-3, 2,5-dimethyl-2,5-di(benzoylperoxy)hexane, 2,5-dimethyl-2,5-di(t-butylperoxy)hexane and α,α'-bis(t-butylperoxy-m-isopropyl)benzene; peroxy esters such as t-butyl peroxyacetate, t-butyl peroxyisobutyrate, t-butyl peroxypivalate, t-butyl peroxymaleate, t-butyl peroxyneodecanoate, t-butyl peroxybenzoate and di-t-butyl peroxyphthalate; ketone peroxides such as dicyclohexanone peroxide; and mixtures thereof. Of these, preferable are organic peroxides having a half-life period of 1 minute at 130 to 200°C. Particularly preferable are dicumyl peroxide, di-t-butyl peroxide, di-t-butylperoxy-3,3,5-trimethylcyclohexane, t-butylcumyl peroxide, di-t-amyl peroxide and t-butyl hydroperoxide.

Examples of the polar monomers other than the unsaturated carboxylic acids and derivatives thereof (e.g., the acid anhydrides and esters) include hydroxyl group-containing ethylenically unsaturated compounds, amino group-containing ethylenically unsaturated compounds, epoxy group-containing ethylenically unsaturated compounds, aromatic vinyl compounds, vinyl ester compounds and vinyl chloride.

### Crosslinkable composition

The crosslinkable composition according to the present invention contains the α-olefin/non-conjugated cyclic polyene copolymer (A) and a crosslinking agent (B), and may optionally contain a catalyst (C), a reaction inhibitor (D), a silane coupling agent (E), a plasticizer (F) and other components.

### Crosslinking agent (B)

The crosslinking agent (B) used in the present invention is not particularly limited. Examples thereof include sulfur, organic peroxides, and SiH group-containing compounds (B1) described below. The SiH group-containing compounds are particularly preferable.

Sulfur may be preferably used in an amount of 0.1 to 10 parts by weight based on 100 parts by weight of the α-olefin/non-conjugated cyclic polyene copolymer (A). The organic peroxide may be preferably used in an amount of 0.05 to 15 parts by weight based on 100 parts by weight of the α-olefin/non-conjugated cyclic polyene copolymer (A).

The SiH group-containing compound (B1) may be preferably used in amounts described below.

### [SiH group-containing compound (B1)]

The SiH group-containing compound (B1) used in the present invention reacts with the α-olefin/non-conjugated cyclic polyene copolymer (A), and functions as a crosslinking agent. There is no specific limitation on the molecular structure of the SiH group-containing compound (B1), and conventional resins such as those of linear, cyclic, branched and three-dimensional network structures are employable. However, they should contain at least two hydrogen atoms bonded directly to a silicon atom, namely SiH groups, in the molecule.

Compounds represented by the following composition formula are usually used as the SiH group-containing compounds (B1) :

R⁴_{b}H_{c}SiO_{(4-b-c)/2}

In the above formula, R⁴ is a substituted or unsubstituted monovalent hydrocarbon group of 1 to 10, particularly 1 to 8 carbon atoms (with the proviso that the hydrocarbon group does not have an aliphatic unsaturated bond). Examples of the monovalent hydrocarbon groups include phenyl group, halogen-substituted alkyl groups such as trifluoropropyl group, and the alkyl groups previously mentioned with respect to R¹ in Formula (III). Of these, methyl, ethyl, propyl, phenyl and trifluoropropyl groups are preferable, and methyl and phenyl groups are particularly preferable, and phenyl group is most preferable.

The letter b is a number satisfying 0≤b<3, preferably 0.6<b<2.2, particularly preferably 1.5≤b≤2. The letter c is a number satisfying 0<c≤3, preferably 0.002≤c<2, particularly preferably 0.01≤c≤1. The total of b and c is a number satisfying 0<b+c≤3, preferably 1.5<b+c≤2.7.

The SiH group-containing compound (B1) is an organohydrogen polysiloxane that preferably has 2 to 100 silicon atoms, more preferably 2 to 4 silicon atoms, particularly preferably 2 to 3 silicon atoms, most preferably 2 silicon atoms, in the molecule. Specific examples of such compounds include siloxane oligomers such as 1,1,3,3-tetramethyldisiloxane, 1,3,5,7-tetramethyltetracyclosiloxane and 1,3,5,7,8-pentamethylpentacyclosiloxane; methylhydrogenpolysiloxanes terminated with trimethylsiloxy groups at the both ends of molecular chain, dimethylsiloxane/methylhydrogensiloxane copolymers terminated with trimethylsiloxy groups at the both ends of molecular chain, methylhydrogenpolysiloxanes terminated with silanol groups at the both ends of molecular chain, dimethylsiloxane/methylhydrogensiloxane copolymers terminated with silanol groups at the both ends of molecular chain, dimethylpolysiloxanes terminated with dimethylhydrogensiloxy groups at the both ends of molecular chain, methylhydrogenpolysiloxanes terminated with dimethylhydrogensiloxy groups at the both ends of molecular chain, dimethylsiloxane/methylhydrogensiloxane copolymers terminated with dimethylhydrogensiloxy groups at the both ends of molecular chain, and silicone resins composed of R⁴₂(H)SiO_{1/2} units and SiO_{4/2} units, and arbitrarily containing R⁴₃SiO_{1/2} units, R⁴₂SiO_{2/2} units, R⁴(H)SiO_{2/2} units, (H)SiO_{3/2} units or R⁴SiO_{3/2} units.

The methylhydrogenpolysiloxanes terminated with trimethylsiloxy groups at the both ends of molecular chain include compounds represented by the following formula, and compounds of the same formula in which part or all of the methyl groups are substituted with ethyl, propyl, phenyl or trifluoropropyl groups:

(CH₃)₃SiO-(-SiH (CH₃)-O-)_{d}-Si(CH₃)₃

wherein d is an integer of 2 or greater, preferably 2 to 4, more preferably 2 to 3, most preferably 2.

The dimethylsiloxane/methylhydrogensiloxane copolymers terminated with trimethylsiloxy groups at the both ends of molecular chain include compounds represented by the following formula, and compounds of the same formula in which part or all of the methyl groups are substituted with ethyl, propyl, phenyl or trifluoropropyl groups:

(CH₃)₃SiO-(-Si (CH₃)₂-O-)ₑ-(-SiH(CH₃)-O-)_{f}-Si(CH₃)₃

wherein e is an integer of 1 or greater, and f is an integer of 2 or greater, and they are each preferably 2 to 4, more preferably 2 to 3, most preferably 2.

The methylhydrogenpolysiloxanes terminated with silanol groups at the both ends of molecular chain include compounds represented by the following formula, and compounds of the same formula in which part or all of the methyl groups are substituted with ethyl, propyl, phenyl or trifluoropropyl groups:

HOSi(CH₃)₂O-(-SiH(CH₃)-O-)₂-Si(CH₃)₂OH

The dimethylsiloxane/methylhydrogensiloxane copolymers terminated with silanol groups at the both ends of molecular chain include compounds represented by the following formula, and compounds of the same formula in which part or all of the methyl groups are substituted with ethyl, propyl, phenyl or trifluoropropyl groups:

HOSi(CH₃)₂O-(-Si(CH₃)₂-O-)ₑ-(-SiH(CH₃)-O-)_{f}-Si(CH₃)₂OH

wherein e is an integer of 1 or greater, and f is an integer of 2 or greater, and they are each preferably 2 to 4, more preferably 2 to 3, most preferably 2.

The dimethylpolysiloxanes terminated with dimethylhydrogensiloxy groups at the both ends of molecular chain include compounds represented by the following formula, and compounds of the same formula in which part or all of the methyl groups are substituted with ethyl, propyl, phenyl or trifluoropropyl groups:

HSi(CH₃)₂O-(-Si(CH₃)₂-O-)ₑ-Si(CH₃)₂H

wherein e is an integer of 1 or greater.

The methylhydrogenpolysiloxanes terminated with dimethylhydrogensiloxy groups at the both ends of molecular chain include compounds represented by the following formula, and compounds of the same formula in which part or all of the methyl groups are substituted with ethyl, propyl, phenyl or trifluoropropyl groups:

HSi(CH₃)₂O-(-SiH(CH₃)-O-)ₑ-Si(CH₃)₂H

wherein e is an integer of 0 or greater, preferably 0 to 2, more preferably 0 to 1, most preferably 2.

The dimethylsiloxane/methylhydrogensiloxane copolymers terminated with dimethylhydrogensiloxy groups at the both ends of molecular chain include compounds represented by the following formula, and compounds of the same formula in which part or all of the methyl groups are substituted with ethyl, propyl, phenyl or trifluoropropyl groups:

HSi(CH₃)₂O-(-Si(CH₃)₂-O-)ₑ-(-SiH(CH₃)-O-)ₕ-Si(CH₃)₂H

wherein e is an integer of 1 or greater, and f is an integer of 0 or greater, preferably 0 to 2, more preferably 0 to 1, most preferably 0.

These compounds may be prepared by conventional processes. For example, they may be easily obtained as follows: octamethylcyclotetrasiloxane and/or tetramethylcyclotetrasiloxane, and a compound capable of forming a terminal group and containing a triorganosilyl or diorganohydrogensiloxy group, such as hexamethyldisiloxane or 1,3-dihydro-1,1,3,3-tetramethyldisiloxane, are equilibrated at a temperature of about -10°C to about +40°C in the presence of a catalyst such as sulfuric acid, trifluoromethanesulfonic acid or methanesulfonic acid.

The SiH group-containing compound (B1) is used in an amount of 0. 1 to 100 parts by weight, preferably 0. 1 to 75 parts by weight, more preferably 0. 1 to 50 parts by weight, even more preferably 0.2 to 30 parts by weight, still more preferably 0.2 to 20 parts by weight, particularly preferably 0.5 to 10 parts by weight, most preferably 0.5 to 5 parts by weight, per 100 parts by weight of the α-olefin/non-conjugated cyclic polyene copolymer (A). The use of the SiH group-containing compound (B1) in the above amount results in excellent compression set resistance, moderate crosslink density and excellent strength properties and elongation properties.

### Catalyst (C)

The catalyst (C) for optional use in the present invention is an addition reaction catalyst. The catalyst accelerates the addition reaction (hydrosilylation of alkene) of the alkenyl groups of the α-olefin/non-conjugated cyclic polyene copolymer (A) with the SiH groups of the SiH group-containing compound (B1). Examples of the catalysts include addition reaction catalysts composed of platinum group elements (i.e., Group 8 metal-based catalysts such as Group 8 metals of the Periodic Table, Group 8 metal complexes and Group 8 metal compounds), such as platinum catalysts, palladium catalysts and rhodium catalysts. Of these, the platinum catalysts are preferable.

The platinum catalysts used herein may be known catalysts generally used in the addition curing. Examples thereof include a finely divided metallic platinum catalyst described in U.S. Patent No. 2, 970, 150, a chloroplatinic acid catalyst described in U.S. Patent No. 2,823,218, complex compounds of platinum and hydrocarbons described in U.S. Patents No. 3, 159, 601 and No. 159, 662, complex compounds of chloroplatinic acid and olefins described in U.S. Patent No. 3, 516, 946, and complex compounds of platinum and vinyl siloxane described in U.S. Patents No. 3,775,452 and No. 3,814,780. More specific examples are platinum (platinum black), chloroplatinic acid, platinum/olefin complexes, platinum/alcohol complexes, and platinum supported on carriers such as alumina and silica.

Examples of the palladium catalysts include palladium, palladium compounds and chloropalladic acid. Examples of the rhodium catalysts include rhodium, rhodium compounds and chlororhodic acid.

Other exemplary catalysts (C) include Lewis acids and cobalt carbonyl.

The catalyst (C) is used in an amount in terms of metal atom of 0. 1 to 100, 000 ppm by weight, generally 0. 1 to 10,000 ppm by weight, preferably 1 to 5,000 ppm by weight, more preferably 5 to 1,000 ppm by weight, based on the α-olefin/non-conjugated cyclic polyene copolymer (A).

When the catalyst (C) is used in the above amount, the obtainable polymer composition will provide crosslinked shaped articles having a moderate crosslink density, excellent strength properties and elongation properties, and a low volatile content.

In this invention, crosslinked shaped articles may be obtained also by irradiating uncrosslinked shaped articles of the polymer composition containing no catalyst (C), with light, γ rays or electron beams.

### Reaction inhibitor (D)

The present invention may use a reaction inhibitor (D) together with the catalyst (C). Examples of the reaction inhibitors (D) include benzotriazole, ethynyl group-containing alcohols (e.g., ethynylcyclohexanol), acrylonitrile, amide compounds (e.g., N,N-diallylacetamide, N,N-diallylbenzamide, N,N,N',N'-tetraallyl-o-phthalic acid diamide, N,N,N',N'-tetraallyl-m-phthalic acid diamide and N,N,N',N'-tetraallyl-p-phthalic acid diamide), sulfur, phosphorus, nitrogen, amine compounds, sulfur compounds, phosphorus compounds, tin, tin compounds, tetramethyltetravinylcyclotetrasiloxane, and organic peroxides such as hydroperoxides.

The reaction inhibitor (D) is used in an amount of 0 to 50 parts by weight, generally 0.0001 to 50 parts by weight, preferably 0.001 to 30 parts by weight, more preferably 0.005 to 20 parts by weight, even more preferably 0.01 to 10 parts by weight, particularly preferably 0.05 to 5 parts by weight, per 100 parts by weight of the α-olefin/non-conjugated cyclic polyene copolymer (A).

The use of the reaction inhibitor (D) in an amount of 50 parts by weight or less promises a high crosslinking sped and high productivity of crosslinked shaped articles. The use of the reaction inhibitor (D) in an amount exceeding 50 parts by weight is unfavorable because of disadvantageous cost.

### Silane coupling agent (E)

The present invention may use a silane coupling agent (E) together with the catalyst (C), in order to further improve self-adhesion properties. Examples of the silane coupling agents (E) include (meth)acryl functional silane coupling agents, epoxy functional silane coupling agents and amino (imino) functional silane coupling agents.

Specific examples of the (meth)acryl functional silane coupling agents include 3-methacryloxypropyl trimethoxysilane, 3-methacryloxypropyl triethoxysilane, 3-acryloxypropyl trimethoxysilane, 3-acryloxypropyl triethoxysilane, methacryloxymethyl trimethoxysilane, methacryloxymethyl triethoxysilane, acryloxymethyl trimethoxysilane and acryloxymethyl triethoxysilane.

Specific examples of the epoxy functional silane coupling agents include 3-glycidoxypropyl trimethoxysilane, 3-glycidoxypropyl triethoxysilane, 2-(3,4-epoxycyclohexyl)ethyltrimethoxysilane and 2-(3,4-epoxycyclohexyl)ethyltriethoxysilane.

Specific examples of the amino (imino) functional silane coupling agents include:
amino and/or imino group-containing alkoxysilanes such as H₂NCH₂CH₂CH₂Si(OCH₃)₃, H₂NCH₂CH₂NHCH₂CH₂CH₂Si(OCH₃)₃, H₂NCH₂CH₂NHCH₂CH₂CH₂Si(CH₃) (OCH₃)₂ and (C₂H₅O)₃Si(CH₂)₃NH(CH₂)₂NH(CH₂)₃Si(OC₂H₅)₃;
reaction products of the amino and/or imino group-containing alkoxysilanes with epoxysilane compounds such as those represented by the following formulae: 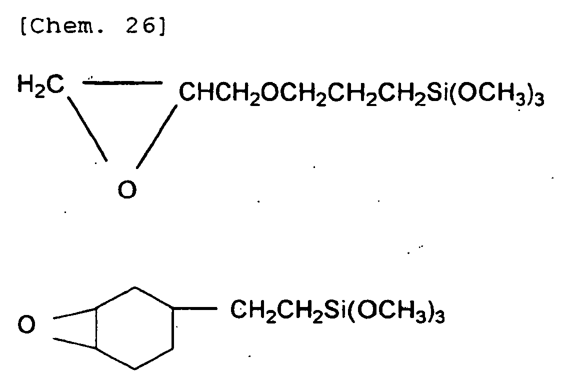 and
reaction products of the amino and/or imino group-containing alkoxysilanes with methacryloxysilane compounds such as CH₂=C(CH₃)COOCH₂CH₂CH₂Si(OCH₃) and CH₂=C(CH₃)COOCH₂CH₂CH₂Si(OCH₂CH₂OCH₃)₃.

The silane coupling agent (E) is preferably used in an amount of 0.01 to 10 parts by weight, more preferably 0.1 to 5 parts by weight, per 100 parts by weight of the total of the α-olefin/non-conjugated polyene random copolymer rubber (A) and the SiH group-containing compound (B).

Reaction products of the amino and/or imino group-containing alkoxysilanes with methacryloxysilane compounds such as CH₂=C(CH₃)COOCH₂CH₂CH₂Si(OCH₃) and CH₂=C(CH₃)COOCH₂CH₂CH₂Si(OCH₂CH₂OCH₃)₃.

The silane coupling agent (E) is preferably used in an amount of 0.01 to 10 parts by weight, more preferably 0.1 to 5 parts by weight, per 100 parts by weight of the total of the α-olefin/non-conjugated polyene random copolymer (A) and the crosslinking agent (B) such as the SiH group-containing compound (B1).

### Plasticizer (F)

The crosslinkable composition may contain a plasticizer (F) as required. The plasticizer (F) may be a softener generally used for rubbers. Specific examples thereof include petroleum softeners such as paraffin process oils, naphthene process oils, aromatic process oils, ethylene/α-olefin cooligomers, paraffin wax, liquid paraffin, white oil, petrolatum, lubricating oil, petroleum asphalt and vaseline; coal tar softeners such as coal tar and coal tar pitch; fatty oil softeners such as castor oil, linseed oil, rapeseed oil and coconut oil; tall oil; synthetic polymer substances such as petroleum resins, atactic polypropylenes and coumarone-indene resins; and phthalic acid derivatives, isophthalic acid derivatives, tetrahydrophthalic acid derivatives, adipic acid derivatives, azelaic acid derivatives, sebacic acid derivatives, dodecane-2-acid derivatives, maleic acid derivatives, fumaric acid derivatives, trimellitic acid derivatives, pyromellitic acid derivatives, citric acid derivatives, itaconic acid derivatives, oleic acid derivatives, ricinoleic acid derivatives, stearic acid derivatives, phosphoric acid derivatives, sulfonic acid derivatives, glycerin derivatives, glutaric acid derivatives, epoxy derivatives, glycol derivatives, paraffin derivatives, and silicone oils. Of these, preferable are the ethylene/α-olefin cooligomers, process oils and paraffin derivatives which do not inhibit the silylation. The paraffin process oils and ethylene/α-olefin cooligomers are particularly preferable.

The plasticizer (F) is used in an amount of 0 to 1,000 parts by weight, usually 1 to 1,000 parts by weight, preferably 5 to 800 parts by weight, more preferably 10 to 700 parts by weight, even more preferably 20 to 500 parts by weight, particularly preferably 30 to 300 parts by weight, per 100 parts by weight of the α-olefin/non-conjugated polyene random copolymer (A).

The use of the plasticizer (F) in the above amount leads to improved flowability and forming properties. The α-olefin/non-conjugated polyene random copolymer (A) is usable as a plasticizer as described later. However, the plasticizer used in the crosslinkable composition of the invention is preferably other than the α-olefin/non-conjugated polyene random copolymer (A) itself.

### Other components

The crosslinkable composition of the invention may contain known additives depending on intended uses of crosslinked products while still achieving the objects of the invention. Examples of the additives include rubber reinforcing agents, inorganic fillers, softeners, anti-aging agents, processing aids, vulcanization accelerators, organic peroxides, crosslinking aids, foaming agents, foaming aids, colorants, dispersants and flame retardants. In the case where the crosslinking agent (B) is the SiH group-containing compound (B1), additives which do not inhibit the hydrosilylation of the alkene are preferably used.

The rubber reinforcing agents provide increased mechanical properties of crosslinked rubbers, such as tensile strength, tear strength and abrasion resistance. Examples of the rubber reinforcing agents include carbon blacks such as SRF, GPF, FEF, HAF, ISAF, SAF, FT and MT; these carbon blacks surface treated with a silane coupling agent or the like; finely divided silicic acid; and silica.

Specific examples of the silica include fumed silica and precipitated silica. The silica may be surface treated with reactive silanes such as hexamethyldisilazane, chlorosilane and alkoxysilane, or low-molecular weight siloxanes. The specific surface area (BED method) of the silica is preferably 50 m²/g or more, more preferably 100 to 400 m²/g.

The type and amount of the rubber reinforcing agent may be determined appropriately depending on uses. The rubber reinforcing agent is generally used in an amount of 300 parts by weight at a maximum, preferably 200 parts by weight at a maximum, per 100 parts by weight of the α-olefin/non-conjugated polyene random copolymer.

Examples of the inorganic fillers include light calcium carbonate, heavy calcium carbonate, talc and clay.

The type and amount of the inorganic filler may be determined appropriately depending on uses. The inorganic filler is generally used in an amount of 300 parts by weight at a maximum, preferably 200 parts by weight at a maximum, per 100 parts by weight of the α-olefin/non-conjugated polyene random copolymer (A).

Examples of the anti-aging agents include amine-type, hindered phenol-type and sulfur-type anti-aging agents. The anti-aging agents are used while still achieving the objects of the present invention. The amine-type anti-aging agents for use in the present invention include diphenylamines and phenylenediamines. The amine-type anti-aging agents are not particularly limited, but 4,4'-(α,α-dimethylbenzyl)diphenylamine and N,N'-di-2-naphthyl-p-phenylenediamine are preferable. These compounds may be used singly or in combination of 2 or more kinds.

The hindered phenol-type anti-aging agents for use in the present invention are not particularly limited, and preferred examples include:
(1) tetrakis-[methylene-3-(3',5'-di-t-butyl-4'-hydroxyphenyl)propionato]methane;
(2) 3,9-bis[2-{3-(3-t-butyl-4-hydroxy-5-methylphenyl)propionyloxy}-1,1-dimethylethyl]-2,4-8,10-tetraoxaspiro[5,5]undecane; and
(3) 2,2'-methylene-bis-(4-methyl-6-t-butylphenol).

The sulfur-type anti-aging agents for use in the present invention include those commonly used in rubbers without limitation. Preferred examples include 2-mercaptobenzimidazole, zinc salt of 2-mercaptobenzimidazole, 2-mercaptomethylbenzimidazole, zinc salt of 2-mercaptomethylbenzimidazole and pentaerythritol-tetrakis-(β-lauryl-thiopropionate)

The processing aids may be compounds generally used in processing of rubbers. Examples of the processing aids include higher fatty acids such as ricinoleic acid, stearic acid, palmitic acid and lauric acid; salts of higher fatty acids such as barium stearate, zinc stearate and calcium stearate; and esters of higher fatty acids such as ricinoleic acid esters, stearic acid esters, palmitic acid esters and lauric acid esters.

The processing aid is generally used in an amount of 10 parts by weight or less, preferably 5 parts by weight or less, per 100 parts by weight of the α-olefin/non-conjugated polyene random copolymer (A). But an optimum amount thereof may be appropriately determined in accordance with the required property values.

The present invention may use an organic peroxide together with the catalyst (C) to conduct both addition crosslinking and radical crosslinking. The organic peroxide is used in an amount of about 0.1 to about 10 parts by weight per 100 parts by weight of the α-olefin/non-conjugated polyene random copolymer (A). The organic peroxides used herein may be conventional organic peroxides usually employed in rubber crosslinking.

The organic peroxide is preferably used in combination with a crosslinking aid. Examples of the crosslinking aids include sulfur; quinone dioxime compounds such as p-quinone dioxime; methacrylate compounds such as polyethylene glycol dimethacrylate; allyl compounds such as diallyl phthalate and triallyl cyanurate; maleimide compounds; and divinylbenzene. The crosslinking aid is used in an amount of 0.5 to 2 mol per mol of the organic peroxide, preferably in an approximately equimolar amount.

The crosslinkable composition may be blended with known rubbers while still achieving the objects of the invention. Examples of such rubbers include natural rubbers (NR), isoprene-based rubbers such as isoprene rubber (IR), and conjugated diene-based rubbers such as butadiene rubber (BR), styrene-butadiene rubber (SBR), acrylonitrile-butadiene rubber (NBR) and chloroprene rubber (CR).

Hitherto known ethylene/α-olefin copolymer rubbers may also be used, with examples including ethylene/propylene random copolymers (EPR) and ethylene/α-olefin/polyene copolymers (such as EPDM) other than the α-olefin/non-conjugated polyene random copolymer (A).

### Crosslinkable composition and uses thereof

The crosslinkable composition of the invention may be suitably used as sealing materials, coating materials, potting materials and adhesives. As used herein, the sealing materials refer to materials for sealing (packing or hermetically sealing). In a broard sense, they include materials that are used for watertightness and airtightness in joints and contact sites in various industries including the machine industry, the electric industry and the chemical industry. The sealing materials may be in a paste form or a solid form. For more information, see "Building Sealants - basics and proper way to use - (First edition, Japan Sealant Industry Association, KOUBUNSHA CORPORATION, p. 141)". Particularly preferably in the present invention, the sealing materials may be applied in gaps and then cured, or may be applied between objects and then cured.

The uses of the composition will be described in detail.

The crosslinkable rubber composition of the invention may be used for electric and electronic parts, transportation vehicles, civil engineering and construction materials, medical appliances and leisure goods.

The uses for electric and electronic parts include sealing materials, potting materials, coating materials and adhesives for heavy electric machinery parts, light electrical appliance parts, and circuits and substrates of electric and electronic devices; repairing materials for covered electric cables; insulating sealing materials for electric cable joint parts; rolls for office automation equipment; vibration absorbing materials; and gels and encapsulation materials for condensers.

For example, the sealing materials are suitably used for refrigerators, freezers, washing machines, gas meters, microwave ovens, steam irons and leakage breakers.

For example, the potting materials are suitably used for potting transformer high-voltage circuits, printed boards, high voltage transformers equipped with variable resistors, electrical insulating parts, semiconductive parts, conductive parts, solar cells and TV fly-back transformers.

For example, the coating materials are suitably used for coating circuit elements of high voltage thick film resistors and hybrid IC; HIC; electrical insulating parts; semiconductive parts; conductive parts; modules; printed circuits; ceramic boards; buffer materials for diodes, transistors and bonding wires; semiconductive elements; and optical fibers for optical communication.

For example, the adhesives are suitably used for bonding cathode-ray tube wedges and necks, electrical insulating parts, semiconductive parts and conductive parts.

The uses for transportation vehicles include automobiles, ships, airplanes and railway vehicles.

The uses for automobiles include sealing materials for automobile engine gaskets, electric trim parts and oil filters; potting materials for igniter HIC and automobile hybrid IC; coating materials for automobile bodies, automobile window glasses and engine control boards; and adhesives for oil pan gaskets, timing belt cover gaskets, other automobile gaskets, moles, head lamp lenses, sun roof seals and mirrors.

The uses for ships include sealing materials for wiring and connecting distributor boxes, electric system parts and electric wires; and adhesives for electric wires and glass.

The uses for civil engineering and construction include building sealants for butt joints in glass screen method for commercial buildings, joints of glass fringes and sashes, interior finishing joints in toilet facilities, lavatory and show cases, joints in bathtub circumferences, outer wall expansion joints of prefabrication houses, and joints of siding boards; sealing materials for double glazed glass; civil engineering sealants used in road maintenance; paints and adhesives used for metals, glasses, stone materials, slates, concretes and tiles; and adhesive sheets, water proofing sheets and vibration-proof sheets.

The uses for medical appliances include medical rubber stoppers, syringe gaskets and rubber stoppers for reducing blood pressure.

The uses for leisure goods include swimming materials such as swimming caps, diving masks and earplugs; and gel buffer materials for sport shoes and baseball gloves.

The crosslinkable rubber composition of the present invention may be suitably used as sealing materials (sealants), potting materials, coating materials and adhesives for electric and electronic parts, transportation vehicles, civil engineering and construction materials, leisure goods and the like. The copolymer (A) may be suitably used as sealing materials (sealants), potting materials, coating materials and adhesives.

### Preparation of crosslinkable composition and crosslinked rubber shaped articles thereof

Crosslinked articles may be manufactured from the crosslinkable composition in a manner similar to that for common room temperature vulcanizable rubbers (RTV rubbers), specifically by mixing together the α-olefin/non-conjugated polyene random copolymer (A), SiH group-containing compound (B1), and optionally catalyst (C), reaction inhibitor (D), silane coupling agent (E) and plasticizer (F), and further conventional additives depending on the intended uses of the crosslinked articles, such as rubber reinforcing agents, inorganic fillers, anti-aging agents, processing aids, vulcanization accelerators, organic peroxides, crosslinking aids, foaming agents, foaming aids, colorants, dispersants and flame retardants; and by forming the compounded rubber into a desired shape (by filling a gap with the rubber, applying the rubber between objects, coating an object with the rubber, or potting an object into the rubber), followed by standing at room temperature to perform crosslinking,(vulcanizing). Heating may be performed to accelerate the crosslinking reaction.

More specifically, the second crosslinkable composition of the present invention may be prepared by mixing together, with use of a kneading apparatus such as a planetary mixer or a kneader, the α-olefin/non-conjugated polyene random copolymer (A), SiH group-containing compound (B1), and optionally catalyst (C), reaction inhibitor (D), silane coupling agent (E) and plasticizer (F), and further conventional additives depending on the intended uses of the crosslinked articles, such as rubber reinforcing agents, inorganic fillers, anti-aging agents, processing aids, vulcanization accelerators, organic peroxides, crosslinking aids, foaming agents, foaming aids, colorants, dispersants and flame retardants.

In the present invention, the α-olefin/non-conjugated polyene random copolymer (A) may be kneaded with the rubber reinforcing agents, inorganic fillers and the like at high temperatures. Meanwhile, simultaneously kneading the copolymer with both the SiH group-containing compound (B1) and the catalyst (C) at high temperatures can result in crosslinking (scorching). Therefore when the SiH group-containing compound (B1) and the catalyst (C) are added at the same time, the kneading temperature is preferably not more than 80°C. When either the SiH group-containing compound (B) or the catalyst (C) is added, the kneading may be carried out at high temperatures above 80°C. It is often preferable to use cooling water for removing the heat generated by the kneading.

The second crosslinkable rubber composition prepared as described above may be formed into a desired shape by filling a gap with it, applying it between objects, coating an object with it or potting an object into it, or by various forming methods involving an extruder, a calendar roll, a press, an injection molding machine or a transfer molding machine, followed by standing at room temperature to perform crosslinking reaction, whereby objective crosslinked products (crosslinked rubber shaped articles) can be obtained. Heating may be performed to accelerate the crosslinking reaction.

### α-Olefin/non-conjugated polyene random copolymer (A) as plasticizer

The α-olefin/non-conjugated polyene random copolymer (A) may be suitably used as a plasticizer, more preferably as a reactive plasticizer. As used herein, the plasticizer is a substance which is added to a polymer and functions as a plasticizer during processing and is polymerized or addition reacted to rubber molecules after the polymer is vulcanized. (See Gomu Yougo Jiten (Rubber Terminology Dictionary) published from The Society of Rubber Industry, Japan.)

In particular, the plasticizer is suitably used for rubbers, preferably for hydrocarbon polymers, more preferably for olefin polymers. Optimally, the plasticizer is used for copolymers of ethylene, an α-olefin of 3 to 20 carbon atoms, and optionally a non-conjugated polyene (with the proviso that the plasticized copolymers preferably do not satisfy the requirements of the α-olefin/non-conjugated polyene random copolymer (A)).

The plasticizer of the present invention may be used for rubbers and resins according to the usual method.

The plasticizer gives processability to rubbers and resins, and the rubbers and resins show flexibility and working properties. Crosslinked products of such rubbers and resins have excellent mechanical properties. The plasticizer will not bleed out from the crosslinked product because the plasticizer has been polymerized or addition reacted to the rubber molecules after the crosslinking.

The plasticizer is generally used in an amount of 0.5 to 1, 000 parts by weight, preferably 1 to 1, 000 parts by weight, more preferably 5 to 800 parts by weight, still more preferably 10 to 700 parts by weight, particularly preferably 20 to 500 parts by weight, most preferably 30 to 300 parts by weight, per 100 parts by weight of the total of the resins or rubbers.

### EXAMPLES

The present invention will be described below by Examples without limiting the scope of the invention.

In Examples and Comparative Examples, properties of the copolymers were measured by the following methods.

### Compositions of copolymers

The compositions of the α-olefin/non-conjugated cyclic polyene copolymers were determined by ¹³C-NMR.

### Intrinsic viscosities [η]

The intrinsic viscosities [η] of the α-olefin/non-conjugated cyclic polyene copolymers were determined at 135°C in decalin.

### Molecular weight distributions (Mw/Mn)

The molecular weight distributions of the α-olefin/non-conjugated cyclic polyene copolymers were expressed as a ratio (Mw/Mn) of a weight-average molecular weight (Mw) to a number-average molecular weight (Mn), determined by GPC. GPC employed GPC Alliance 2000 (manufactured by Waters), columns GMH-HT and GMH-HTL (manufactured by Tosoh Co. Ltd.), orthodichlorobenzene as a solvent, and a differential refractometer.

### Propylene content

Propylene was determined by IR.

### Content of vinyl group-containing non-conjugated cyclic polyene

The content of a vinyl group-containing non-conjugated cyclic polyene in the α-olefin/non-conjugated cyclic polyene copolymer was determined by measuring an area of an IR peak at 910 cm⁻¹ (CH deformation vibration of the vinyl group) based on a calibration curve calibrated from H-NMR data.

### Iodine value (IV)

The iodine value as an indicator of double bond content was determined by converting the vinyl group content in the non-conjugated cyclic polyene to an amount of iodine added per 100 g of the α-olefin/non-conjugated cyclic polyene copolymer.

### Crystalline heat of fusion (ΔH)(kJ/kg)

The crystalline heat of fusion was determined with a differential scanning calorimeter (DSC) (DSC-60 manufactured by Shimadzu Corporation). A sample loaded in an aluminum pan was molten by heating at 300°C in a nitrogen atmosphere, then cooled to 0°C, and heated at a rate of 20°C/min.

### [Example 1]

A thoroughly nitrogen-purged 500-ml glass autoclave was charged with 250 ml of toluene, and the liquid and gas phases were saturated with an ethylene/propylene mixture gas which was supplied at 200 NL/h (ethylene/propylene flow rate ratio = 30/170) . Thereafter, the autoclave was sequentially charged with 1.2.5 mmol in terms of aluminum atom of methylaluminoxane (MAO) manufactured by Albemarle Corporation, 53.4 mg of 5-vinyl-2-norbornene (VNB), and 0.005 mmol of a transition metal compound (1) represented by the following formula. Polymerization was then initiated. In the atmosphere of the ethylene/propylene mixture gas, the reaction was performed at 40°C and ordinary pressure for 30 minutes, and the polymerization was terminated by addition of a small amount of isobutyl alcohol. After the completion of the polymerization, the reaction liquid was poured into an acetone/methanol (each 500 ml) mixture solvent containing 5 ml of concentrated hydrochloric acid, which resulted in complete precipitation of the polymer. The mixture was stirred and filtered through a glass filter. The polymer was dried under a reduced pressure at 130°C for 10 hours to give 0.633 g of ethylene/propylene/VNB copolymer (activity: 253 kg/mol·h). The intrinsic viscosity [η] was 0.89 (dl/g), and the molecular weight and molecular weight distribution by GPC were Mw: 476,000 and Mw/Mn: 2.18, respectively. Analysis of comonomer contents showed that propylene-derived structural units accounted for 40 mol% and VNB-derived structural units accounted for 0.5 mol%. The crystalline heat of fusion (ΔH) was 0 kJ/kg, in other words, the polymer was amorphous.

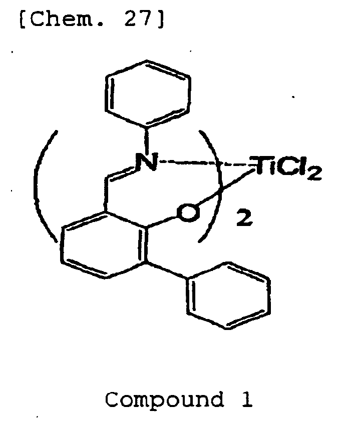

### [Comparative Example 1]

Polymerization was carried out in the same manner as in Example 1, except that VOCl₃ (0.005 mmol) and ethylaluminum sesquichloride [SQ:Et_{1.5}AlCl_{1.5}] (1.0 mmol) were used as catalysts. Consequently, 0.16 g of ethylene/propylene/VNB copolymer was obtained (activity: 64 kg/mol). The molecular weight and molecular weight distribution by GPC were Mw: 950,000 and Mw/Mn: 4.33, respectively. IR analysis of comonomer contents showed that propylene-derived structural units accounted for 38 mol% and VNB-derived structural units accounted for 0.4 mol%. The crystalline heat of fusion (ΔH) was 0 kJ/kg, in other words, the polymer was amorphous.

### [Example 2]

Polymerization was carried out in the same manner as in Example 1, except that the transition metal compound was replaced by the following compound 2. The results are shown in Table 1.

### [Example 3]

Polymerization was carried out in the same manner as in Example 1, except that the transition metal compound was replaced by the following compound 3. The crystalline heat of fusion (ΔH) was 0 kJ/kg, in other words, the polymer was amorphous. The results are shown in Table 1.

### [Example 4]

Polymerization was carried out in the same manner as in Example 1, except that the transition metal compound was replaced by the following compound 4. The crystalline heat of fusion (ΔH) was 0 kJ/kg, in other words, the polymer was amorphous. The results are shown in Table 1.

### [Example 5]

Polymerization was carried out in the same manner as in Example 1, except that the transition metal compound was replaced by the following compound 5. The crystalline heat of fusion (ΔH) was 0 kJ/kg, in other words, the polymer was amorphous. The results are shown in Table 1.

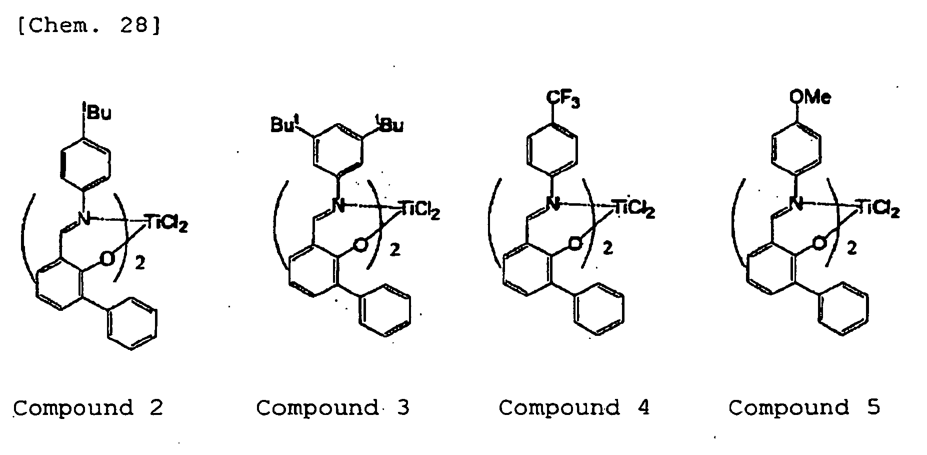

**[Table 1]**

| Ex. | Catalyst | Yield [g] | Activity [kg/mol-Ti·h] | [η] | Mw | Mw/Mn | Propylene content [mol%] | VNB content [mol%] |
|---|---|---|---|---|---|---|---|---|
| 2 | Compound 2 | 3.20 | 1280 | 0.95 | 43500 | 2.02 | 45.3 | 0.58 |
| 3 | Compound 3 | 3.11 | 1240 | 0.79 | 35200 | 1.97 | 46.2 | 0.58 |
| 4 | Compound 4 | 2.91 | 1160 | 0.94 | 47800 | 2.21 | 44.6 | 0.61 |
| 5 | Compound 5 | 2.83 | 1130 | 0.45 | 17000 | 2.32 | 50.6 | 0.72 |

### [Examples 6-19] (Continuous polymerization)

In a glass polymerizer having a substantial internal volume of 3 L and having a stirring blade (rotation: 1500 rpm), terpolymerization of ethylene, propylene and 5-vinyl-2-norbornene was continuously carried out at 40°C and normal pressure under the conditions shown in Table 2. An ethylene/propylene/hydrogen mixture gas was fed from a side of the polymerizer. A toluene solution of the compound 2, a toluene solution of MAO, a heptane solution of 5-vinyl-2-norbornene and heptane were continuously supplied each at a rate of 1 L/h (4 L/h in total). (The holding time was 30 minutes.) After 2 hours after the initiation of the material supply, sampling was performed for 20 minutes. The resultant polymerization solution was suspended in 1 L of water containing 20 ml of concentrated hydrochloric acid. The suspension was stirred at 400 r.p.m. for 30 minutes. The aqueous phase was removed, and the solvent was evaporated. The residue was dried under a reduced pressure at 130°C for 10 hours to give ethylene/propylene/VNB copolymer. The crystalline heat of fusion (ΔH) was 0 kJ/kg, in other words, the polymer was amorphous. The polymerization activity and analysis results of the copolymer are shown in Table 2.

### [Comparative Example 2]

Polymerization was carried out in the same manner as in Example 6, except that VO(OEt)Cl₂ was used as a catalyst and SQ(Et_{1.5}AlCl_{1.5}) as a cocatalyst. The crystalline heat of fusion (ΔH) was 0 kJ/kg, in other words, the polymer was amorphous. The results are shown in Table 2.

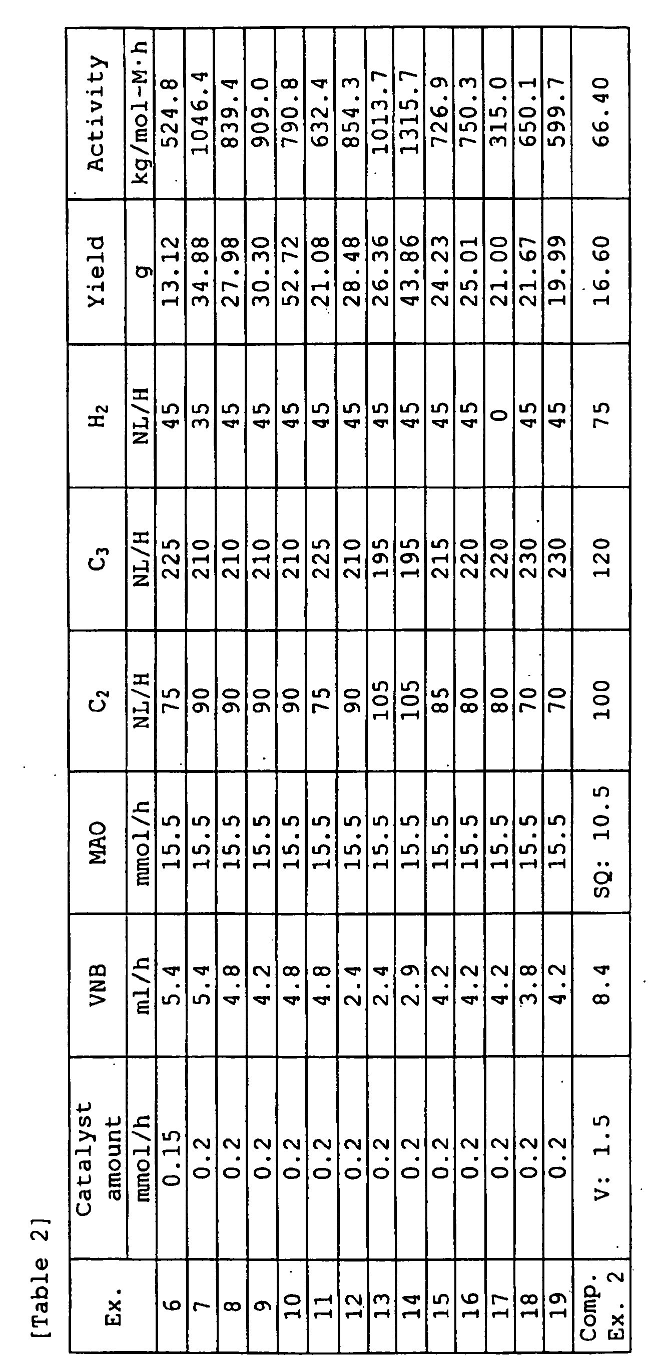

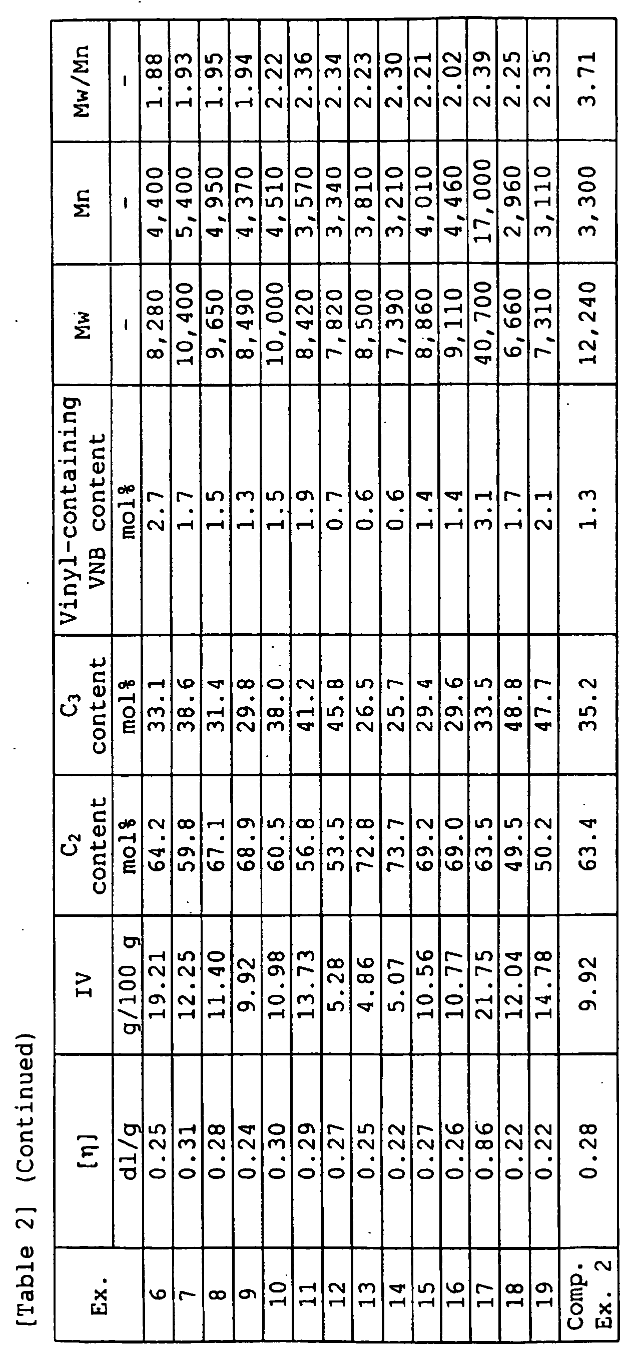

### INDUSTRIAL APPLICABILITY

Because of containing the vinyl groups at side chains, the α-olefin/non-conjugated cyclic polyene copolymers give crosslinked products having excellent tensile properties. The α-olefin/non-conjugated cyclic polyene copolymers may be used as plasticizers for polymers such as rubbers to provide superior processing properties, and mechanical strength and rubber elasticity (compression set resistance) of crosslinked products. By modifying the vinyl groups, polar groups can be introduced into the copolymers. Such modified copolymers may be used for the production of various functional polyolefin materials.

## Claims

1. An α-olefin/non-conjugated cyclic polyene copolymer (A) comprising structural units (I) represented by Formula (I) and structural units (II) represented by Formula (II),
wherein the structural units (I) contain structural units derived from ethylene and structural units derived from one or more C3-31 α-olefins, the weight ratio of the structural units derived from ethylene and the structural units derived from the one or more C3-31 α-olefins in the total of the structural units (I) is 40/60 to 95/5 (ethylene-derived structural units/ α-olefin-derived structural units) as determined by ¹³C-NMR, the structural units (II) are derived from 5-vinyl-2-norbornene, the structural units (II) account for 0.01 to 20% by weight of the total (100% by weight) of the structural units (I) and the structural units (II) as determined by ¹³C-NMR, and the proportion (S) of the double bonds of the structural units (II) which are retained without being consumed during the polymerization is not less than 85 mol % determined by measuring an area of an IR peak at 910 cm⁻¹ (CH deformation vibration of the vinyl group) based on a calibration curve calibrated from H-NMR data, the copolymer having a molecular weight distribution (Mw/Mn) of not more than 2.7 as determined by GPC and being amorphous (crystalline heat of fusion (ΔH) : 0 kJ/kg) or crystalline with a crystalline heat of fusion (ΔH) of less than 90 kJ/kg as determined by differential scanning calorimetry; 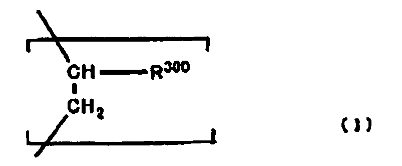 (wherein R³⁰⁰ is a hydrogen atom or a linear or branched hydrocarbon group of 1 to 29 carbon atoms); 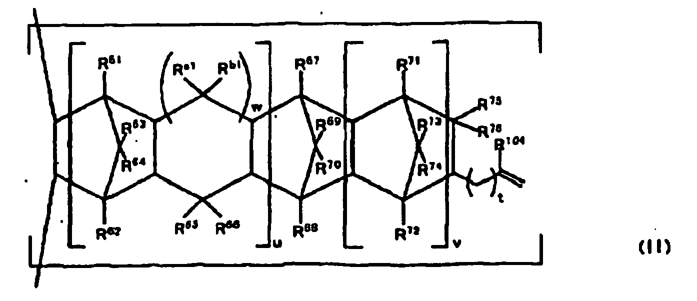 (wherein u is 0; v is 0; R⁶⁷ to R⁷⁰ and R⁷⁵ to R⁷⁶ are each a hydrogen atom; R¹⁰⁴ is a hydrogen atom and t is 0).

2. A sealing material comprising the α-olefin/non-conjugated cyclic polyene copolymer (A) according to claim 1.

3. A process for producing the α-olefin/non-conjugated cyclic polyene copolymer (A) described in claim the process comprising
copolymerizing ethylene, at least one linear or branched α-olefin of 3 to 31 carbon atoms and 5-vinyl-2-norbornene in the presence of a catalyst comprising:
(P) a transition metal compound represented by Formula (III); and
(Q) at least one compound selected from:
(Q-1) an organometallic compound;
(Q-2) an organoaluminum oxy-compound; and
(Q-3) a compound capable of reacting with the transition metal compound (P) to form an ion pair; 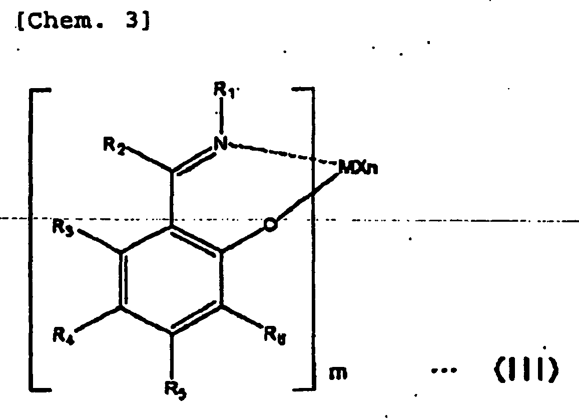
(wherein M is a transition metal of Group 3 to Group 11; m is an integer of 1 to 4; R¹ to R⁶ may be the same or different and are each a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group or a tin-containing group, and two or more of these groups may be linked together to form a ring; when m is 2 or greater, one of R¹ to R⁶ in one ligand may be linked to one of R¹ to R⁶ in another ligand (with the proviso that the groups R¹ are not linked together), and R¹s, R²s, R³s, R⁴s, R⁵s and R⁶s may be each the same or different atoms or groups; n is a number satisfying the valence of M; X is a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group or a tin-containing group; and when n is 2 or greater, the groups x may be the same or different and may be linked together to form a ring).

4. A crosslinkable composition comprising the α-olefin/non-conjugated cyclic polyene copolymer (A) described in claim 1 and a crosslinking agent (B).

5. The crosslinkable composition according to claim 4, wherein the crosslinking agent (B) is a SiH group-containing compound (B1) that has two or more hydrogen atoms bonded to a silicon atom in the molecule.

6. The crosslinkable composition according to claim 4 or claim 5, which further includes a catalyst (C).

7. The crosslinkable composition according to claim 6, which further includes a reaction inhibitor (D) and/or a silane coupling agent (E).

8. A potting material comprising the α-olefin/non-conjugated cyclic polyene copolymer (A) according to claim 1.

9. A coating material comprising the α-olefin/non-conjugated cyclic polyene copolymer (A) according to claim 1.

10. An adhesive comprising the α-olefin/non-conjugated cyclic polyene copolymer (A) according to claim 1.

## Patentansprüche

1. α-Olefin/nicht-konjugiertes cyclisches Polyencopolymer (A), umfassend Struktureinheiten (I) dargestellt durch Formel (I) und Struktureinheiten (II) dargestellt durch Formel (II),
wobei die Struktureinheiten (I) Struktureinheiten, die sich von Ethylen ableiten, und Struktureinheiten, die sich von einem oder mehreren C3-31-α-Olefin(en) ableiten, enthalten, das Gewichtsverhältnis der Struktureinheiten, die sich von Ethylen ableiten, und der Struktureinheiten, die sich von einem oder mehreren C3-31-α-Olefin(en) ableiten, in der Gesamtmenge der Struktureinheiten (I) 40/60 bis 95/5 (Ethylenabgeleitete Struktureinheiten/α-Olefin-abgeleitete Struktureinheiten) beträgt, wie mit ¹³C-NMR ermittelt wurde, die Struktureinheiten (II) von 5-Vinyl-2-norbornen abgeleitet sind, die Struktureinheiten (II) 0,01 bis 20 Gew.% der Gesamtmenge (100 Gew.%) der Struktureinheiten (I) und der Struktureinheiten (II) ausmachen, wie mit ¹³C-NMR ermittelt wurde, und der Anteil (S) der Doppelbindungen der Struktureinheiten (II), die während der Polymerisation erhalten werden, ohne verbraucht zu werden, nicht weniger als 85 Mol% beträgt, was durch Messen der Fläche des IR-Peaks bei 910 cm⁻¹ (CH-Deformationsschwindung der Vinylgruppe) basierend auf einer Kalibrierkurve, die aus H-NMR-Daten kalibriert wurde, ermittelt wird, wobei das Copolymer eine Molekulargewichtsverteilung (Mw/Mn) von nicht mehr als 2,7 besitzt, wie durch GPC ermittelt wurde, und amorph (kristalline Schmelzwärme (ΔH): 0 kJ/kg) oder kristallin mit einer kristallinen Schmelzwärme (ΔH) von weniger als 90 kJ/kg ist, wie durch dynamische Differenzkalorimetrie ermittelt wurde; 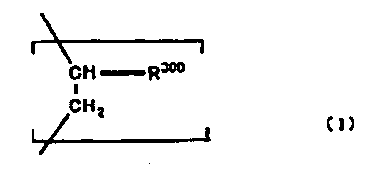 (wobei R³⁰⁰ ein Wasserstoffatom oder eine lineare oder verzweigte Kohlenwasserstoffgruppe mit 1 bis 29 Kohlenstoffatomen ist); 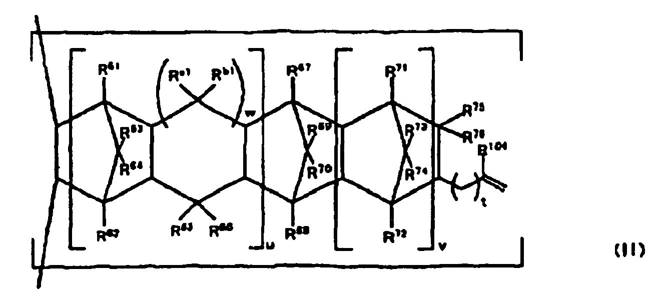 (wobei u 0 ist; v 0 ist; R⁶⁷ bis R⁷⁰ und R⁷⁵ bis R⁷⁶ jeweils ein Wasserstoffatom sind; R¹⁰⁴ ein Wasserstoffatom ist und t 0 ist).

2. Dichtungsmaterial, umfassend das α-Olefin/nichtkonjugierte cyclische Polyencopolymer (A) gemäß Anspruch 1.

3. Verfahren zur Herstellung eines α-Olefin/nichtkonjugierten cyclischen Polyencopolymers (A) gemäß Anspruch 1, wobei das Verfahren umfasst
Copolymerisieren von Ethylen, mindestens einem linearen oder verzweigten α-Olefin mit 3 bis 31 Kohlenstoffatomen und 5-Vinyl-2-norbornen in der Gegenwart eines Katalysators, umfassend:
(P) eine Übergangsmetallverbindung, dargestellt durch Formel (III); und
(Q) mindestens eine Verbindung ausgewählt aus:
(Q-1) eine organometallische Verbindung;
(Q-2) eine Organoaluminiumoxy-Verbindung; und
(Q-3) eine Verbindung, die in der Lage ist mit einer Übergangsmetallverbindung (P) zu reagieren, um ein Ionenpaar zu bilden; 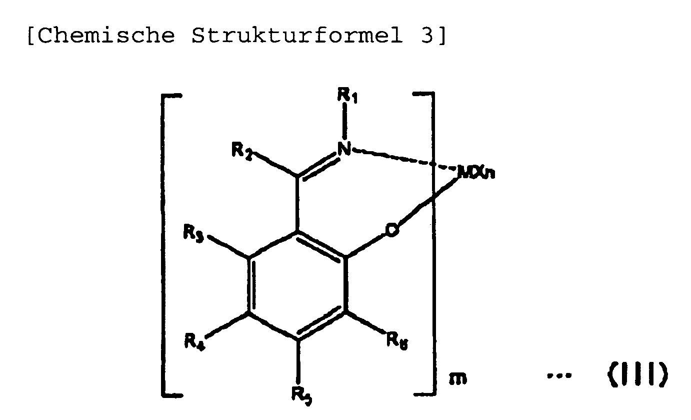
(wobei M ein Übergangsmetall der Gruppe 3 bis Gruppe 11 ist; m eine ganze Zahl von 1 bis 4 ist; R¹ bis R⁶ gleich oder verschieden sein können und jeweils ein Wasserstoffatom, ein Halogenatom, eine Kohlenwasserstoffgruppe, ein heterocyclischer Rest, eine sauerstoffhaltige Gruppe, einen stickstoffhaltige Gruppe, eine borhaltige Gruppe, eine schwefelhaltige Gruppe, eine phosphorhaltige Gruppe, eine siliziumhaltige Gruppe, eine germaniumhaltige Gruppe oder eine zinnhaltige Gruppe ist und zwei oder mehrere dieser Gruppen miteinander verknüpft sein können, um einen Ring zu bilden; wenn m 2 oder größer ist, kann jeweils einer von R¹ bis R⁶ mit jeweils einem R¹ bis R⁶ von einem anderen Liganden verknüpft sein (mit der Einschränkung, dass die Gruppen R¹ nicht miteinander verknüpft sind), und die R¹, R², R³, R⁴, R⁵ und R⁶ können dieselben oder unterschiedliche Atome oder Gruppen sein; n eine Zahl ist, die die Valenz von M absättigt; X ein Wasserstoffatom, ein Halogenatom, eine Kohlenwasserstoffgruppe, eine sauerstoffhaltige Gruppe, eine schwefelhaltige Gruppe, eine stickstoffhaltige Gruppe, eine borhaltige Gruppe, eine aluminiumhaltige Gruppe, eine phosphorhaltige Gruppe, eine halogenhaltige Gruppe, ein heterocyclischer Rest, eine siliciumhaltige Gruppe, eine germaniumhaltige Gruppe oder eine zinnhaltige Gruppe ist; und wenn n 2 oder größer ist, die Gruppen X gleich oder verschieden sein können und miteinander verknüpft sein können, um einen Ring zu bilden).

4. Vernetzbare Zusammensetzung, umfassend das α-Olefin/nicht-konjugierte cyclische Polyencopolymer (A) gemäß Anspruch 1 und ein Vernetzungsmittel (B).

5. Vernetzbare Zusammensetzung gemäß Anspruch 4, wobei das Vernetzungsmittel (B) eine SiH-Gruppen enthaltende Verbindung (B1) darstellt, die zwei oder mehr Wasserstoffatome besitzt, die im Molekül an ein Siliziumatom gebunden sind.

6. Vernetzbare Zusammensetzung gemäß Anspruch 4 oder 5, die ferner einen Katalysator (C) enthält.

7. Vernetzbare Zusammensetzung gemäß Anspruch 6, die ferner einen Reaktionshemmer (D) und/oder ein Silankupplungsreagens (E) enthält.

8. Material zum Einbetten, umfassend das α-Olefin/nichtkonjugierte cyclische Polyencopolymer (A) gemäß Anspruch 1.

9. Beschichtungsmaterial, umfassend das α-Olefin/nichtkonjugierte cyclische Polyencopolymer (A) gemäß Anspruch 1.

10. Klebstoff, umfassend das α-Olefin/nicht-konjugierte cyclische Polyencopolymer (A) gemäß Anspruch 1.

## Revendications

1. Copolymère d'α-oléfine/polyène cyclique non conjugué (A) comprenant des unités structurelles (I) représentées par la Formule (I) et des unités structurelles (II) représentées par la Formule (II),
dans lequel les unités structurelles (I) contiennent des unités structurelles dérivées de l'éthylène et des unités structurelles dérivées d'une ou plusieurs α-oléfine(s) en C₃-C₃₁, le rapport en poids des unités structurelles dérivées de l'éthylène et des unités structurelles dérivées de l'une ou plusieurs α-oléfine(s) en C₃-C₃₁ dans le total des unités structurelles (I) est 40/60 à 95/5 (unités structurelles dérivées de l'éthylène/unités structurelles dérivées de l'α-oléfine) comme déterminé par RMN du ¹³C, les unités structurelles (II) sont dérivées du 5-vinyl-2-norbornène, les unités structurelles (II) représentent 0,01 à 20% en poids du total (100% en poids) des unités structurelles (I) et des unités structurelles (II) comme déterminé par RMN du ¹³C, et la proportion (S) des liaisons doubles des unités structurelles (II) qui sont conservées sans être consommées pendant la polymérisation n'est pas inférieure à 85% en moles, déterminée en mesurant une superficie d'un pic IR à 910 cm⁻¹ (vibration de déformation du CH du groupe vinyle), sur la base d'une courbe d'étalonnage étalonnée à partir de données de RMN du H, le copolymère ayant une distribution de poids moléculaire (Mw/Mn) de pas plus de 2,7 comme déterminée par GPC et étant amorphe (chaleur de fusion cristalline (ΔH) : 0 kJ/kg) ou cristallin avec une chaleur de fusion cristalline (ΔH) de moins de 90 kJ/kg comme déterminée par analyse calorimétrique à compensation de puissance ; 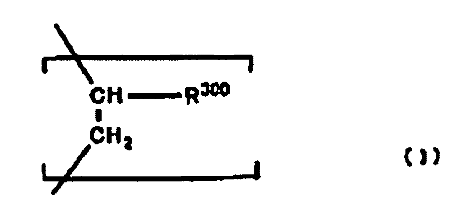 (dans laquelle R³⁰⁰ est un atome d'hydrogène ou un groupe hydrocarbure linéaire ou ramifié de 1 à 29 atomes de carbone) ; 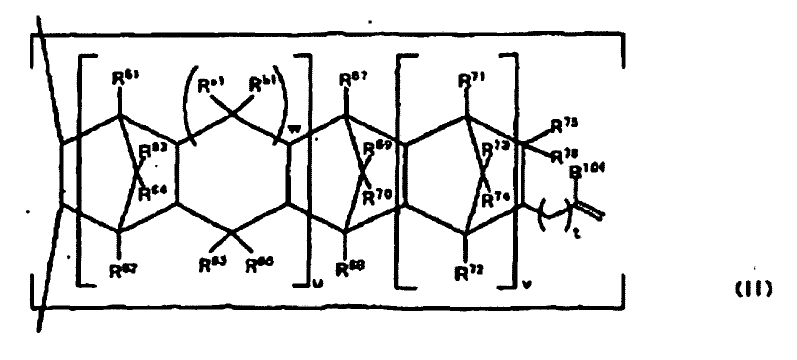 (dans laquelle u est 0 ; v est 0 ; R⁶⁷ à R⁷⁰ et R⁷⁵ à R⁷⁶ sont chacun un atome d'hydrogène ; R¹⁰⁴ est un atome d'hydrogène et t est 0).

2. Matériau d'étanchéité comprenant le copolymère d'α-oléfine/polyène cyclique non conjugué (A) selon la revendication 1.

3. Procédé de production du copolymère d'α-oléfine/polyène cyclique non conjugué (A) selon la revendication 1, le procédé comprenant
la copolymérisation d'éthylène, d'au moins une α-oléfine linéaire ou ramifiée de 3 à 31 atomes de carbone et de 5-vinyl-2-norbornène en présence d'un catalyseur comprenant :
(P) un composé de métal de transition représenté par la Formule (III) ; et
(Q) au moins un composé choisi parmi :
(Q-1) un composé organométallique ;
(Q-2) un oxycomposé d'organoaluminium ; et
(Q-3) un composé apte à réagir avec le composé de métal de transition (P) pour former une paire d'ions ; 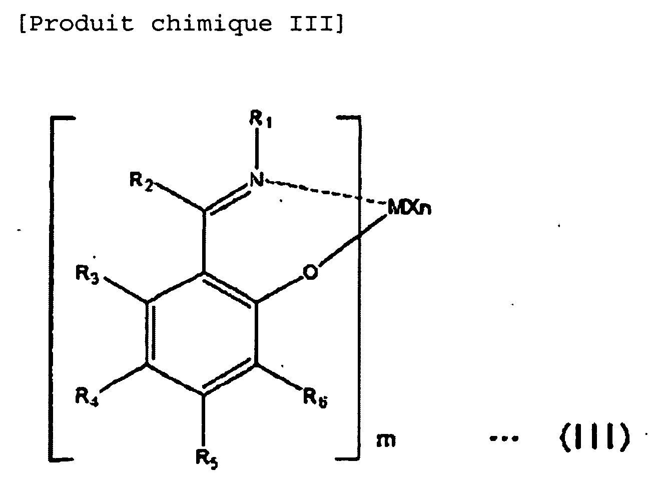
(dans laquelle M est un métal de transition du Groupe 3 au Groupe 11 ; m est un entier de 1 à 4 ; R¹ à R⁶ peuvent être identiques ou différents et sont chacun un atome d'hydrogène, un atome d'halogène, un groupe hydrocarbure, un résidu de composé hétérocyclique, un groupe contenant de l'oxygène, un groupe contenant de l'azote, un groupe contenant du bore, un groupe contenant du soufre, un groupe contenant du phosphore, un groupe contenant du silicium, un groupe contenant du germanium ou un groupe contenant de l'étain, et deux ou plus de ces groupes peuvent être liés ensemble pour former un cycle ; lorsque m est 2 ou plus, un de R¹ à R⁶ dans un ligand peut être lié à un de R¹ à R⁶ dans un autre ligand (sous réserve que les groupes R¹ ne soient pas liés ensemble), et les R¹, les R², les R³, les R⁴, les R⁵ et les R⁶ peuvent être chacun des atomes ou des groupes identiques ou différents ; n est un nombre satisfaisant à la valence de M ; X est un atome d'hydrogène, un atome d'halogène, un groupe hydrocarbure, un groupe contenant de l'oxygène, un groupe contenant du soufre, un groupe contenant de l'azote, un groupe contenant du bore, un groupe contenant de l'aluminium, un groupe contenant du phosphore, un groupe contenant un halogène, un résidu de composé hétérocyclique, un groupe contenant du silicium, un groupe contenant du germanium ou un groupe contenant de l'étain ; et lorsque n est 2 ou plus, les groupes X peuvent être identiques ou différents et peuvent être liés ensemble pour former un cycle).

4. Composition réticulable comprenant le copolymère d'α-oléfine/polyène cyclique non conjugué (A) selon la revendication 1 et un agent de réticulation (B).

5. Composition réticulable selon la revendication 4, dans laquelle l'agent de réticulation (B) est un composé contenant un groupe SiH (B1) qui a deux atomes d'hydrogène ou plus liés à un atome de silicium dans la molécule.

6. Composition réticulable selon la revendication 4 ou la revendication 5, qui inclut en outre un catalyseur (C).

7. Composition réticulable selon la revendication 6, qui inclut en outre un inhibiteur de réaction (D) et/ou un agent de couplage à base de silane (E).

8. Matériau d'enrobage comprenant le copolymère d'α-oléfine/polyène cyclique non conjugué (A) selon la revendication 1.

9. Matériau de revêtement comprenant le copolymère d'α-oléfine/polyène cyclique non conjugué (A) selon la revendication 1.

10. Adhésif comprenant le copolymère d'α-oléfine/polyène cyclique non conjugué (A) selon la revendication 1.
